# EUROPEAN PATENT APPLICATION

(11) **EP 4 676 105 A1**
(43) Date of publication of application: **07.01.2026**
(21) Application number: 24785368.2
(22) Date of filing: 08.04.2024
(51) Int. Cl.: H04W 4/90, H04W 4/16, H04W 76/50, H04M 3/51, H04W 84/06, H04W 88/02

(54) **ELECTRONIC DEVICE FOR SUPPORTING SATELLITE SERVICE, AND OPERATING METHOD THEREOF**

(30) Priority: 07.04.2023 KR 20230046152; 30.06.2023 KR 20230084808
(71) Applicant: Samsung Electronics Co., Ltd., Suwon-si, Gyeonggi-do 16677 (KR)
(72) Inventor: KIM, Yein, Suwon-si, Gyeonggi-do 16677 (KR); KIM, Dongho, Suwon-si, Gyeonggi-do 16677 (KR); KIM, Sangwon, Suwon-si, Gyeonggi-do 16677 (KR); HAN, Yonggil, Suwon-si, Gyeonggi-do 16677 (KR); HWANG, Changhwan, Suwon-si, Gyeonggi-do 16677 (KR)
(74) Representative: Nederlandsch Octrooibureau
(86) International application number: PCT/KR2024/004620
(87) International publication number: WO 2024/210673

(57) **Abstract**

An embodiment of the present disclosure provides a method for supporting a satellite service in an electronic device, and an electronic device for supporting same. The electronic device may comprise: a display; a communication circuit for supporting satellite communication with a satellite; a memory; and a processor. The processor can: on the basis of execution detection of a satellite service, provide, on a full screen of the display, a pointing interface that induces pointing between the electronic device and the satellite; transmit a message on the basis of pointing completion based on the pointing interface; on the basis of the completion of the message transmission, convert the pointing interface into a first pop-up interface and provide same as a pop-up; and, on the basis of a message-related trigger, convert the first pop-up interface into a second pop-up interface that induces pointing of the satellite, and provide same as a pop-up.

## Description

### [Technical Field]

The disclosure provides a method for supporting a satellite service (or a satellite communication service) in an electronic device, and an electronic device for supporting the same.

### [Background Art]

With the advance of digital technology, various types of electronic devices such as smartphones, digital cameras, and/or wearable devices have become widely used. To support and enhance functions of these electronic devices, hardware and/or software components of the electronic devices are continuously being developed.

Recent communication systems are considering the provision of communication services using not only base stations fixed on the ground but also entities not fixed on the ground. For example, a communication system supports satellite communication using a satellite. Accordingly, research and development are being conducted to enable electronic devices to support satellite communication through connection to satellites in situations in which connection to base stations is difficult. In an embodiment, satellite communication using satellites is attracting attention in terms of reducing shadow areas where communication services are unavailable due to the lack of cellular network connection.

The above-described information may be provided as related art for the purpose of assisting in understanding the disclosure. No assertion or decision is made as to whether any of the above might be applicable as prior art with regard to the disclosure.

### [Disclosure of Invention]

### [Technical Problem]

When an electronic device supports satellite services based on satellite connections, the electronic device may perform a pointing operation for a connection to a satellite.

An embodiment of the disclosure provides a method for providing an interface which supports a satellite service in an electronic device and supporting an effective satellite service using the interface, and an electronic device for supporting the same.

An embodiment of the disclosure provides a method for adaptively switching and providing an interface for a satellite service based on the operating state of a communication circuit (e.g., a satellite modem) of an electronic device, and an electronic device for supporting the same.

An embodiment of the disclosure provides a method for automatically switching an interface based on the operational state of a communication circuit (e.g., a satellite modem) so as to avoid unnecessarily maintaining a satellite connection, establish the satellite connection only when the satellite connection is actually required, and provide relevant information, and an electronic device for supporting the same.

An embodiment of the disclosure provides a method for supporting a pointing operation by, during the execution of a satellite service, a first interface in a reduced form as a pop-up when a satellite connection is unnecessary, and a second interface when a satellite connection is necessary, and an electronic device for supporting the same.

The technical subjects pursued in the disclosure may not be limited to the above-mentioned technical subjects, and other technical subjects which are not mentioned herein may be clearly understood from the following description by those skilled in the art to which the disclosure pertains.

### [Solution to Problem]

An electronic device according to an embodiment of the disclosure may include a display, a communication circuit configured to support satellite communication with a satellite, at least one processor including processing circuitry, and a memory configured to store instructions. According to an embodiment, the instructions, when executed by the at least one processor, may cause the electronic device to, based on detecting execution of a satellite service, provide a pointing interface as a full screen of the display, the pointing interface being configured to induce pointing between the electronic device and the satellite. According to an embodiment, the instructions, when executed by at least one processor, may cause the electronic device to, based on completion of the pointing based on the pointing interface, transmit a message. According to an embodiment, the instructions, when executed by at least one processor, may cause the electronic device to, based on completion of transmission of the message, switch the pointing interface to a first pop-up interface, and provide the first pop-up interface as a pop-up. According to an embodiment, the instructions, when executed by at least one processor, may cause the electronic device to switch, based on a message-related trigger, the first pop-up interface to a second pop-up interface configured to induce pointing toward the satellite, and provide the second pop-up interface as a pop-up.

A method for operating an electronic device, according to an embodiment of the disclosure, may include, based on detecting execution of a satellite service, providing a pointing interface as a full screen of a display, the pointing interface being configured to induce pointing between the electronic device and a satellite. The operation method may include, based on completion of the pointing based on the pointing interface, transmitting a message. The operation method may include, based on completion of transmission of the message, switching the pointing interface to a first pop-up interface, and providing the first pop-up interface as a pop-up. The operation method may include, based on a message-related trigger, switching the first pop-up interface to a second pop-up interface configured to induce pointing toward the satellite, and providing the second pop-up interface as a pop-up.

To solve the above problems, various embodiments of the disclosure may include a computer-readable recording medium that records a program for executing the method on a processor.

According to an embodiment, a non-transitory computer-readable storage medium (or computer program product) storing one or more programs is described. According to an embodiment, the one or more programs may include instructions, which, when executed by a processor of an electronic device, cause the electronic device to perform the operations of providing a pointing interface as a full screen of a display, based on detecting execution of a satellite service, the pointing interface being configured to induce pointing between the electronic device and the satellite, transmitting a message, based on completion of the pointing based on the pointing interface, switching the pointing interface to a first pop-up interface and providing the first pop-up interface as a pop-up, based on completion of transmission of the message transmission, and based on a message-related trigger, switching the first pop-up interface to a second pop-up interface configured to induce pointing toward the satellite and providing the second pop-up interface as a pop-up.

The additional scope of applicability of the disclosure will become apparent from the detailed description below. However, various changes and modifications within the idea and scope of the disclosure will be apparent to those skilled in the art, and therefore, the detailed description and specific embodiments such as the preferred embodiments of the disclosure are to be understood as merely illustrative examples.

### [Advantageous Effects of Invention]

According to the electronic device, the operation method therefor, and the recording medium according to an embodiment of the disclosure, an interface (e.g., UI and/or UX) may be automatically switched according to the state of the communication circuit (e.g., a satellite modem), thereby avoiding unnecessary maintenance of a satellite connection, establishing the satellite connection only when the satellite connection is actually required, and providing relevant information. According to an embodiment, by simultaneously provide screens for other functions (e.g., messaging and position sharing) performed along with a satellite service, the electronic device may enhance the user accessibility to such other functions even while the satellite service is in use.

According to an embodiment, an electronic device 101 may provide relevant satellite information when pointing is required, thereby ensuring that other tasks are not interrupted during provision of a satellite service.

Various other effects understood directly or indirectly through the disclosure may be provided. Advantageous effects obtainable from the disclosure may not be limited to the above-mentioned effects, and other effects which are not mentioned herein may be clearly understood from the following description by those skilled in the art to which the disclosure pertains.

### [Brief Description of Drawings]

With regard to the description of the drawings, the same or like reference signs may be used to designate the same or like elements.
FIG. 1 is a block diagram of an electronic device in a network environment according to various embodiments.
FIG. 2 is a block diagram 200 of an electronic device 101 for supporting legacy network communication and 5G network communication according to various embodiments;
FIG. 3 illustrates an example of a communication system including an electronic device and a satellite according to an embodiment of the disclosure;
FIG. 4 schematically illustrates a configuration of an electronic device according to an embodiment of the disclosure;
FIG. 5 illustrates an electronic device and a remote communication network environment according to an embodiment;
FIG. 6 illustrates the operation of an electronic device according to an embodiment of the disclosure;
FIG. 7 is a flowchart illustrating a method for operating an electronic device according to an embodiment of the disclosure;
FIGS. 8A and 8B illustrate an example of an interface for supporting the execution of a satellite service in an electronic device according to an embodiment of the disclosure;
FIG. 9 illustrates an example of an interface for supporting position search in an electronic device according to an embodiment of the disclosure;
FIGS. 10A and 10B illustrate an example of an interface for supporting satellite pointing in an electronic device according to an embodiment of the disclosure;
FIG. 11 illustrates an example of an interface provided by an electronic device according to an embodiment of the disclosure in response to satellite pointing failure;
FIG. 12 is a diagram illustrating an example of an interface for supporting satellite pointing in an electronic device according to an embodiment of the disclosure;
FIGS. 13A and 13B illustrating examples of interfaces provided, based on message reception, by an electronic device according to an embodiment of the disclosure;
FIG. 14 illustrates an example of an interface provided by an electronic device according to an embodiment of the disclosure, based on the expiration of a notification message reception wait time;
FIG. 15 illustrates an example of an interface for supporting satellite pointing in an electronic device according to an embodiment of the disclosure;
FIG. 16 is a flowchart illustrating a method for operating an electronic device according to an embodiment of the disclosure;
FIGS. 17A, 17B, 17C, and 17D illustrate examples of interfaces provided by an electronic device according to an embodiment of the disclosure, based on the operational state of a communication circuit;
FIG. 18 illustrates an example of providing signal transmission and reception operations between a satellite and an electronic device according to an embodiment of the disclosure, and corresponding interfaces.
FIG. 19 illustrates an example of an interface supported by an electronic device according to an embodiment of the disclosure in the event of a message transmission failure.
FIG. 20 illustrates an example of an interface that may be supported by an electronic device according to an embodiment of the disclosure, based on a satellite service.
FIG. 21 illustrates an example of an interface that may be supported by an electronic device according to an embodiment of the disclosure, based on a satellite service.
FIGS. 22A, 22B, and 22C illustrate an example of an interface for supporting satellite pointing in an electronic device according to an embodiment of the disclosure;
FIGS. 23A and 23B illustrate an example of an interface for supporting satellite pointing in an electronic device according to an embodiment of the disclosure;
FIGS. 24A, 24B, 24C, and 24D illustrate an example of an interface for supporting satellite pointing in an electronic device according to an embodiment of the disclosure;
FIG. 25 illustrates an example of an interface for supporting satellite pointing in an electronic device according to an embodiment of the disclosure;
FIGS. 26A, 26B, and 26C illustrate examples of an interface for supporting satellite pointing in an electronic device according to an embodiment of the disclosure;
FIG. 27 illustrates an example of an interface for supporting satellite pointing in an electronic device according to an embodiment of the disclosure; and
FIGS. 28 and 29 illustrate examples of an interface for supporting satellite pointing in an electronic device according to an embodiment of the disclosure.

### [Mode for the Invention]

Hereinafter, embodiments of the present disclosure will be described in detail with reference to the drawings so that those skilled in the art to which the present disclosure pertains can easily implement the disclosure. However, the present disclosure may be implemented in various different forms and is not limited to the embodiments described herein. In the description of the drawings, the same or similar reference numerals may be used for the same or similar components. In addition, in the drawings and the related description, descriptions of well-known functions and configurations may be omitted for clarity and conciseness.

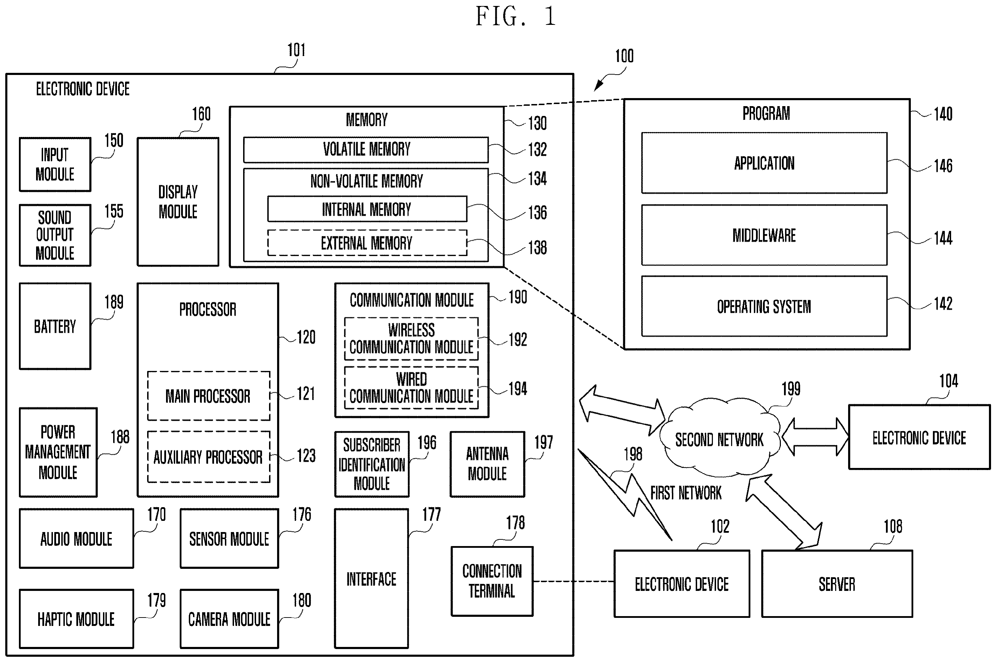

Fig. 1 is a block diagram illustrating an electronic device in a network environment according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

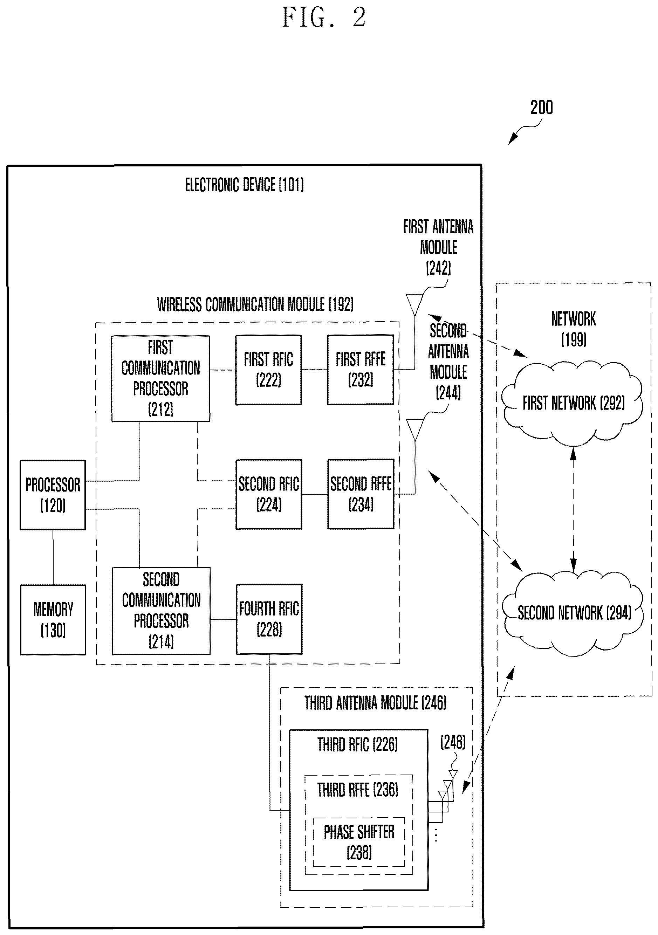

FIG. 2 is a block diagram 200 of an electronic device 101 for supporting legacy network communication and 5G network communication according to certain embodiments.

Referring to FIG. 2, the electronic device 101 may include a first communication processor 212, a second communication processor 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, and an antenna 248. The electronic device 101 may further include the processor 120 and the memory 130.

The network 199 may include a first network 292 and a second network 294. According to another embodiment, the electronic device 101 may further include at least one component among the components illustrated in FIG. 1, and the network 199 may further include at least one other network. According to an embodiment, the first communication processor 212, the second communication processor 214, the first RFIC 222, the second RFIC 224, the fourth RFIC 228, the first RFFE 232, and the second RFFE 234 may be included as at least a part of the wireless communication module 192. According to another embodiment, the fourth RFIC 228 may be omitted or may be included as a part of the third RFIC 226.

The first communication processor 212 may establish a communication channel of a band to be used for wireless communication with the first network 292, and may support legacy network communication via the established communication channel. According to certain embodiments, the first network may be a legacy network including 2G, 3G, 4G, or long term evolution (LTE) network.

The second communication processor 214 may establish a communication channel corresponding to a designated band (e.g., approximately 6GHz to 60 GHz) among bands to be used for wireless communication with the second network 294, and may support 5G network communication via the established channel. According to certain embodiments, the second network 294 may be a 5G network defined in 3GPP.

Additionally, according to an embodiment, the first communication processor 212 or the second communication processor 214 may establish a communication channel corresponding to another designated band (e.g., lower than 6GHz) among bands to be used for wireless communication with the second network 294, and may support 5G network communication via the established channel. According to an embodiment, the first communication processor 212 and the second communication processor 214 may be implemented in a single chip or a single package. According to certain embodiments, the first communication processor 212 or the second communication processor 214 may be implemented in a single chip or a single package, together with the processor 120, the sub-processor 123, or the communication module 190.

In the case of transmission, the first RFIC 222 may convert a baseband signal generated by the first communication processor 212 into a radio frequency (RF) signal in a range of approximately 700MHz to 3GHz used for the first network 292 (e.g., a legacy network). In the case of reception, an RF signal is obtained from the first network 292 (e.g., a legacy network) via an antenna (e.g., the first antenna module 242), and may be preprocessed via an RFFE (e.g., the first RFFE 232). The first RFIC 222 may convert the preprocessed RF signal to a baseband signal so that the base band signal is processed by the first communication processor 212.

In the case of transmission, the second RFIC 224 may convert a baseband signal generated by the first communication processor 212 or the second communication processor 214 into an RF signal (hereinafter, a 5G Sub6 RF signal) of a Sub6 band (e.g., lower than 6GHz) used for the second network 294 (e.g., 5G network). In the case of reception, a 5G Sub6 RF signal is obtained from the second network 294 (e.g., a 5G network) via an antenna (e.g., the second antenna module 244), and may preprocessed by an RFFE (e.g., the second RFFE 234). The second RFIC 224 may convert the preprocessed 5G Sub6 RF signal into a baseband signal so that the baseband signal is processed by a corresponding communication processor from among the first communication processor 212 or the second communication processor 214.

The third RFIC 226 may convert a baseband signal generated by the second communication processor 214 into an RF signal (hereinafter, a 5G Above6 RF signal) of a 5G Above6 band (e.g., approximately 6GHz to 60GHz) to be used for the second network 294 (e.g., 5G network). In the case of reception, a 5G Above6 RF signal is obtained from the second network 294 (e.g., a 5G network) via an antenna (e.g., the antenna 248), and may be preprocessed by the third RFFE 236. The third RFIC 226 may convert the preprocessed 5G Above6 RF signal to a baseband signal so that the base band signal is processed by the second communication processor 214. According to an embodiment, the third RFFE 236 may be implemented as a part of the third RFIC 226.

According to an embodiment, the electronic device 101 may include the fourth RFIC 228, separately from or as a part of the third RFIC 226. In this instance, the fourth RFIC 228 may convert a baseband signal generated by the second communication processor 214 into an RF signal (hereinafter, an IF signal) in an intermediate frequency band (e.g., approximately 9GHz to 11GHz), and may transfer the IF signal to the third RFIC 226. The third RFIC 226 may convert the IF signal to a 5G Above6 RF signal. In the case of reception, a 5G Above6 RF signal is received from the second network 294 (e.g., a 5G network) via an antenna (e.g., the antenna 248), and may be converted into an IF signal by the third RFFE 226. The fourth RFIC 228 may convert the IF signal to a baseband signal so that the base band signal is processed by the second communication processor 214.

According to an embodiment, the first RFIC 222 and the second RFIC 224 may be implemented as a single chip or at least a part of the single package. According to an embodiment, the first RFFE 232 and the second RFFE 234 may be implemented as a single chip or at least a part of the single package. According to an embodiment, at least one antenna module of the first antenna module 242 or the second antenna module 244 may be omitted, or may be combined with another antenna module so as to process RF signals in a plurality of bands.

According to an embodiment, the third RFIC 226 and the antenna 248 may be disposed in the same substrate, and may form the third antenna module 246. For example, the wireless communication module 192 or the processor 120 may be disposed in a first substrate (e.g., main PCB). In this instance, the third RFIC 226 is disposed in a part (e.g., a lower part) of the second substrate (e.g., a sub PCB) separate from the first substrate and the antenna 248 is disposed on another part (e.g., an upper part), so that the third antenna module 246 is formed. By disposing the third RFIC 226 and the antenna 248 in the same substrate, the length of a transmission line therebetween may be reduced. For example, this may reduce a loss (e.g., attenuation) of a signal in a high-frequency band (e.g., approximate 6GHz to 60GHz) used for 5G network communication, the loss being caused by a transmission line. Accordingly, the electronic device 101 may improve the quality or speed of communication with the second network 294 (e.g., 5G network).

According to an embodiment, the antenna 248 may be implemented as an antenna array including a plurality of antenna elements which may be used for beamforming. In this instance, the third RFIC 226 may be, for example, a part of the third RFFE 236, and may include a plurality of phase shifters 238 corresponding to a plurality of antenna elements. In the case of transmission, each of the plurality of phase shifters 238 may shift the phase of a 5G Above6RF signal to be transmitted to the outside of the electronic device 101 (e.g., a base station of a 5G network) via a corresponding antenna element. In the case of reception, each of the plurality of phase shifters 238 may shift the phase of the 5G Above6 RF signal received from the outside via a corresponding antenna element into the same or substantially the same phase. This may enable transmission or reception via beamforming between the electronic device 101 and the outside.

The second network 294 (e.g., 5G network) may operate independently (e.g., Stand-Along (SA)) from the first network 292 (e.g., a legacy network), or may operate by being connected thereto (e.g., Non-Stand Alone (NSA)). For example, in the 5G network, only an access network (e.g., 5G radio access network (RAN) or next generation RAN (NG RAN)) may exist, and a core network (e.g., next generation core (NGC)) may not exist. In this instance, the electronic device 101 may access an access network of the 5G network, and may access an external network (e.g., the Internet) under the control of the core network (e.g., an evolved packed core (EPC)) of the legacy network. Protocol information (e.g., LTE protocol information) for communication with the legacy network or protocol information (e.g., New Radio (NR) protocol information) for communication with the 5G network may be stored in the memory 230, and may be accessed by another component (e.g., the processor 120, the first communication processor 212, or the second communication processor 214).

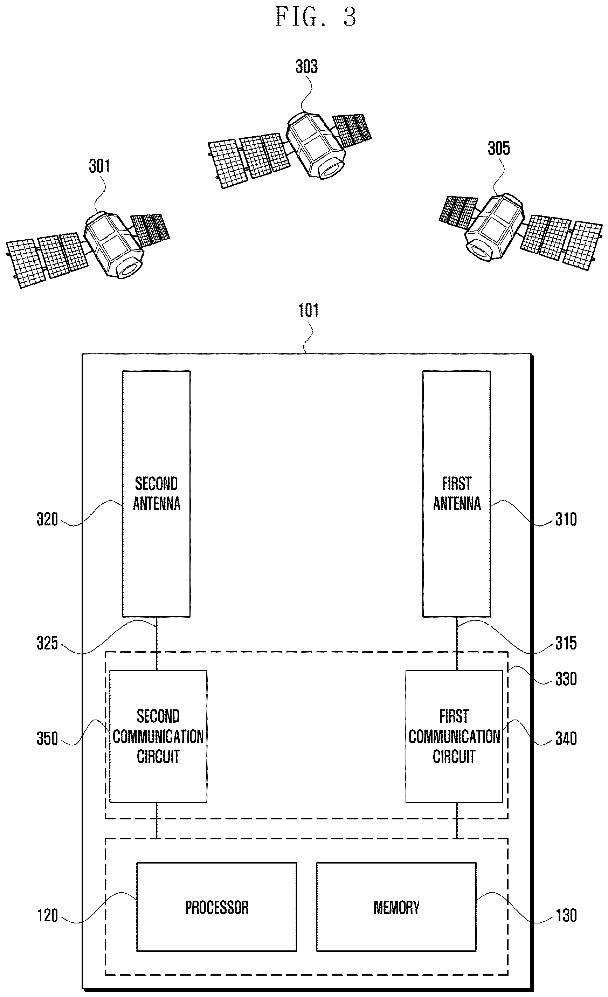

FIG. 3 illustrates an example of a communication system including an electronic device and a satellite according to an embodiment of the disclosure.

As illustrated in FIG. 3, a system according to an embodiment may include at least one satellite 301, 303, or 305 and an electronic device 101. According to an embodiment, the electronic device 101 may be configured to transmit and receive wireless signals to and from the at least one satellite 301, 303, or 305. According to an embodiment, the electronic device 101 may be a device capable of supporting a satellite communication function. In an embodiment, the electronic device 101 may be a portable device such as a cellular phone, a smartphone, a tablet PC, and/or a laptop computer. The disclosure is not limited thereto and may include various other components not described in the disclosure.

According to an embodiment, the electronic device 101 may transmit a wireless signal to the at least one satellite 301, 303, or 305. According to an embodiment, the wireless signal transmitted by the electronic device 101 may be transmitted to a base station (not shown). According to an embodiment, the electronic device 101 may receive a wireless signal from the at least one satellite 301, 303, or 305. According to an embodiment, the wireless signal received from the at least one satellite 301, 303, or 305 may also be received by the base station (not shown).

According to an embodiment, the electronic device 101 may support a satellite communication function and a wireless communication (e.g., cellular communication) function. According to an embodiment, the electronic device 101 may include an antenna (e.g., a first antenna 310 or a second antenna 320) capable of transmitting and/or receiving multiple signals, and a communication circuit 330 (e.g., a first communication circuit 340 or a second communication circuit 350) including at least one circuit capable of processing a signal corresponding to the antenna 310 or 320. According to an embodiment, the electronic device 101 may include a first communication circuit 340 (e.g., a cellular modem) capable of processing a wireless signal for supporting a first wireless communication (e.g., cellular communication and/or satellite communication) and a second communication circuit 350 (e.g., a satellite modem) capable of processing a wireless signal for supporting a second wireless communication (e.g., satellite communication).

Referring to FIG. 3, the electronic device 101 according to an embodiment may include a first antenna 310, a second antenna 320, a communication circuit 330 (e.g., the wireless communication module 192 in FIG. 1), a memory 130 (e.g., the memory 130 in FIG. 1), and a processor 120 (e.g., the processor 120 in FIG. 1). In an embodiment, the processor 120 and memory 130 may be included as elements of the communication circuit 330.

In an embodiment, the electronic device 101 includes multiple antennas (e.g., the first antenna 310 and the second antenna 320), and the antennas 310 and 320 may be implemented as antennas (e.g., antenna arrays) capable of transmitting and receiving one or more signals. According to an embodiment, the antennas 310 and 320 may be configured to support multiple frequency bands, such as a first signal in a first band (e.g., a mid-band (MB) from about 1 GHz to about 2.3 GHz), a second signal in a second band (e.g., a high band (HB) from about 2.3 GHz to about 3 GHz), a third band (e.g., an ultra-high band (UHB) from about 3 GHz to about 5 GHz), and/or a fourth band (e.g., a low band (LB) from about 300 MHz to about 1 GHz). According to an embodiment, although not shown, in relation to the antennas, each of the first antenna 310 and the second antenna 320 may include multiple antennas, and may also include an antenna (e.g., a satellite antenna) for processing a signal (e.g., an RF signal) related to satellite communication with the at least one satellite 301, 303, or 305.

According to an embodiment, the electronic device 101 may include the communication circuit 330 for processing multiple signals transmitted via the antennas 310 and 320. According to an embodiment, the communication circuit 330 may be coupled to a first signal path 315 associated with the first antenna 310 and a second signal path 325 associated with the second antenna 320. According to an embodiment, the communication circuit 330 may include multiple communication circuits (e.g., a first communication circuit 340 and a second communication circuit 350) for processing signals corresponding to the antennas 310 and 320. According to an embodiment, the communication circuit 330 may include the first communication circuit 340 for processing a first signal associated with the first antenna 310, and a second communication circuit 350 for processing a second signal associated with the second antenna 320.

According to an embodiment, the first signal from the first communication circuit 340 may be delivered to the first antenna 310 via the first signal path 315, and may be delivered to the satellite 301, 303, or 305 via the first antenna 310. According to an embodiment, the second signal from the second communication circuit 350 may be delivered to the second antenna 320 via the second signal path 325, and may be delivered to the satellite 301, 303, or 305 via the second antenna 320.

According to an embodiment, the communication circuit 330 (e.g., the first communication circuit 340 or the second communication circuit 350) may include a transmission circuit (or an RF circuit or RF chain) (e.g., radio frequency front end (RFFE)) for processing a transmission signal in a frequency band designated for satellite communication with the at least one satellite 301, 303, or 305. In an embodiment, the first communication circuit 340 and the second communication circuit 350 are shown and described separately (or distinctly), but the disclosure is not limited thereto. For example, the first communication circuit 340 and the second communication circuit 350 may be integrated into a single communication circuit, as illustrated as the communication circuit 330, and may be implemented to process various wireless signals based on the single communication circuit.

According to an embodiment, the processor 120 may perform operations related to processing a wireless signal for satellite communication with the at least one satellite 301, 303, or 305. According to an embodiment, the processor 120 may perform operations of receiving a wireless signal from the at least one satellite 301, 303, or 305 via the first antenna 310 and/or the second antenna 320, and processing the received signal.

According to an embodiment, the memory 130 may store various types of data used by at least one component (e.g., the processor 120 and/or the communication circuit 330) of the electronic device 101. The data may include, for example, input data or output data for an application (e.g., the program 140 in FIG. 1) and a command related to the application. In an embodiment, the data may include data obtained from interactions with a user. In an embodiment, the data may include various types of learning data obtained based on the user's learning from interacting with the user.

According to an embodiment, the memory 130 may store instructions that, when executed, cause the processor 120 to operate. For example, applications of the electronic device 101 may be stored in the memory 130 as software (e.g., the program 140 in FIG. 1) and may be executed by the processor 120. According to an embodiment, the applications may be various applications capable of providing various functions or services (e.g., satellite services (or functions) and/or emergency services) on the electronic device 101.

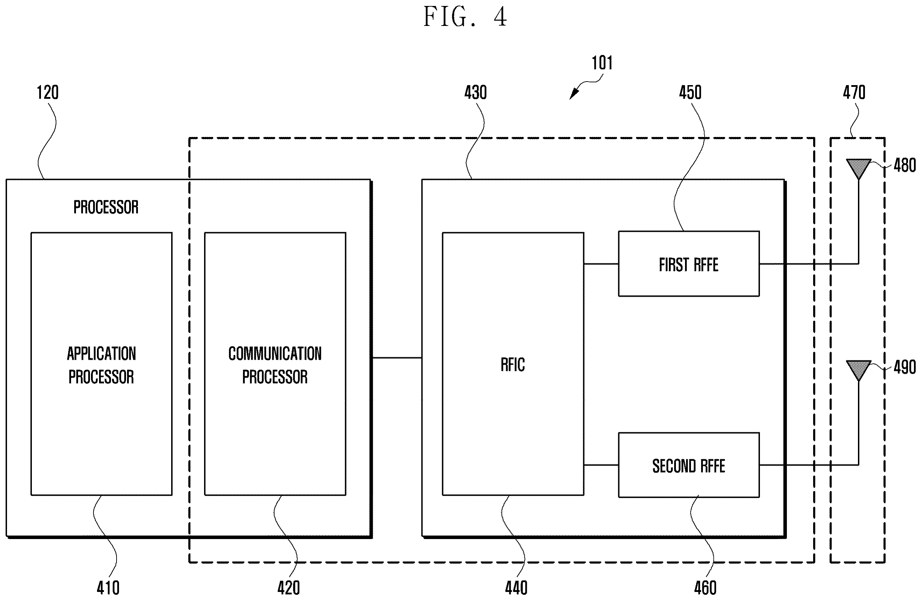

FIG. 4 schematically illustrates a configuration of an electronic device according to an embodiment of the disclosure.

According to an embodiment, FIG. 4 may depict a schematic example of a configuration of an electronic device 101 used to process wireless signals (or RF signals) (e.g., transmission signals) with a satellite in the electronic device 101. According to an embodiment, the electronic device 101 may include all or at least some of the components of the electronic device 101 as described in the description made with reference to FIG. 1. For example, although not illustrated in FIG. 4, the electronic device 101 may include a display module 160 and a memory 130.

Referring to FIG. 4, the electronic device 101 according to an embodiment may include a processor 120, a communication circuit 430 (e.g., a satellite modem), and an antenna 470. According to an embodiment, the electronic device 101 may include all or at least some of the components of the electronic device 101 as described in the descriptions made with reference to FIGS. 1 to 3. Prefixes denoting sequence, such as "first," "second," and "third" below, may be intended solely to distinguish components having the same name and may not have any particular meaning per se.

According to an embodiment, the antenna 470 may include multiple antennas 480 and 490. According to an embodiment, the first antenna 480 and the second antenna 490 may be connected to the communication circuit 430 to transmit and receive RF signals in a frequency band designated for use in a first wireless communication (e.g., cellular communication). According to an embodiment, the first antenna 480 and the second antenna 490 may be connected to the communication circuit 430 to transmit and receive RF signals in a frequency band designated for use in a second wireless communication (e.g., satellite communication).

According to an embodiment, the communication circuit 430 may include an RFIC 440, a first RFFE 450, a second RFFE 460, and/or a communication processor (CP) 420.

In an embodiment, the first RFFE 450 and the second RFFE 460 may be configured to pre-process RF signals (e.g., amply signals) in a frequency band designated for use in the first wireless communication or the second wireless communication. According to an embodiment, the first RFFE 450 and/or the second RFFE 460 may be configured to pre-process RF signals in a first frequency band designated for use in the first wireless communication. In an embodiment, the first RFFE 450 and/or the second RFFE 460 may be configured to pre-process RF signals in a second frequency band designated for use in the second wireless communication.

In an embodiment, during RF signal transmission, the RFIC 440 may convert a baseband signal (or data signal) received from an application processor (AP) 410 into an RF signal, and output the RF signal to the first RFFE 450 and/or the second RFFE 460. In an embodiment, during RF signal reception, the RFIC 440 may convert an RF signal received from the first RFFE 450 and/or the second RFFE 460 to a baseband signal (or data signal) and output the baseband signal to the application processor 410.

According to an embodiment, the processor 120 may perform a function of processing an application layer required by a user of the electronic device 101. According to an embodiment, the processor 120 may provide control and command for functions of various blocks of the electronic device 101. According to an embodiment, the processor 120 may perform computation or data processing related to the control and/or communication of each component of the electronic device 101. For example, the processor 120 may include at least some of the components and/or functions of the processor 120 in FIG. 1. According to an embodiment, the processor 120 may be operatively connected to components of the electronic device 101. According to an embodiment, the processor 120 may load commands or data received from other components of the electronic device 101 into the memory 130, process the commands or data stored in the memory 130, and store the resulting data.

According to an embodiment, the processors 120 may operate individually and/or collectively. According to an embodiment, the processor 120 may include the application processor 410 and/or the communication processor 420. According to an embodiment, the communication processor 420 may be included in and operate within the communication circuit 430.

According to an embodiment, the processor 120 may be the application processor 410. According to an embodiment, the processor 120 may be a system semiconductor responsible for computation, a multimedia driving function, and/or a communication function of the electronic device 101. According to an embodiment, the processor 120 may be configured in the form of a system-on-chip (SoC), and may include a technology-intensive semiconductor chip in which multiple semiconductor technologies are integrated into one and system blocks are implemented on a single chip. According to an embodiment, the system blocks of the processor 120 may include a graphics processing unit (GPU), an image signal processor (ISP), a central processing unit (CPU), a neural processing unit (NPU), a digital signal processor, a modem, a connectivity block, and/or a security block.

According to an embodiment, the modem may perform the role of enabling various communication functions to be used in the electronic device 101. For example, the modem may support communication such as phone calls and data by exchanging signals with a base station or a satellite transmission/reception. According to an embodiment, the modem may include an integrated modem (e.g., a cellular modem, an LTE modem, a 5G modem, a 5G-Advanced modem, a 6G modem, and a satellite modem) that supports communications technologies such as LTE and 2G to 5G. According to an embodiment, the modem may include an artificial intelligence modem that employs an artificial intelligence algorithm.

According to an embodiment, the CPU may perform a role corresponding to the processor 120. According to an embodiment, the CPU may decode user commands, and perform arithmetic and logical operations and/or data processing. For example, the CPU may be responsible for the functions of memory, interpretation, computation, and control. According to an embodiment, the CPU may control the overall functions of the electronic device 101. For example, the CPU may execute all types of software (e.g., applications) of the electronic device 101 on top of an operating system (OS), and may control hardware devices. According to an embodiment, the CPU may include a single processor core, or may include multiple processor cores (multi-core). According to an embodiment, the CPU may execute an application and control overall operations of the processor 120 so as to perform neural network-based tasks required by the execution of the application.

According to an embodiment, the processor 120 may include processing circuitry and/or executable program elements. According to an embodiment, the processor 120 may, based on the processing circuitry and/or executable program elements, control (or process) an operation related to supporting signal processing of wireless signals (e.g., Tx RF signals and/or Rx RF signals) according to cellular communication and/or satellite communication.

According to an embodiment, the processor 120 may identify the type of communication, based on detecting the start of a communication service (e.g., execution of an application related to communication). According to an embodiment, the processor 120 may determine whether the type of communication is a first wireless communication (e.g., cellular communication) or a second wireless communication (e.g., satellite communication).

According to an embodiment, the processor 120 may control (or process) an operation related to providing an interface (e.g., a user interface (UI) and/or user experience (UX)) related to a satellite service (or a satellite communication service), based on an operational state (or an operation mode) of the communication circuit 430 (e.g., satellite modem) during satellite communication.

According to an embodiment, the processor 120 may operate to provide, based on detection of satellite service execution, a pointing interface configured to induce pointing between the electronic device 101 and a satellite as a full screen of a display (e.g., the display module 160 in FIG. 1). According to an embodiment, the processor 120 may operate to transmit a message, based on pointing completion based on the pointing interface. According to an embodiment, the processor 120 may operate to switch the pointing interface to a first pop-up interface, based on completion of the message transmission, and provide the first pop-up interface as a pop-up. According to an embodiment, the processor 120 may operate to switch, based on a trigger related to message reception or message transmission, the first pop-up interface to a second pop-up interface that induces pointing toward the satellite, and provide the second pop-up interface as a pop-up. According to an embodiment, the processor 120 may operate to control the switching between the first pop-up interface and the second pop-up interface, based on an operational state of the communication circuit while providing a satellite service.

According to an embodiment, the processor 120 may perform operations of controlling various interfaces related the satellite service to be displayed via the display module 160 during the provision of the satellite service, and controlling switching between the various interfaces.

According to an embodiment, the display module 160 may include the same or similar configuration as the display module 160 in FIG. 1. According to an embodiment, the display module 160 may include a display, and may visually provide various pieces of information to the outside (e.g., a user) of the electronic device 101 via the display. According to an embodiment, the display module 160 may, under the control of the processor 120, visually provide an executed application (e.g., application 146 in FIG. 1) and various pieces of information (e.g., content, screen, interface, and image) related to the use of the application.

According to an embodiment, detailed operations of the processor 120 of the electronic device 101 will be described with reference to the drawings set forth below.

According to an embodiment, the operations performed by the processor 120 may be implemented by executing instructions stored on a recording medium (or a computer program product). For example, the recording medium may include a non-transitory computer-readable recording medium that records programs for executing various operations performed by the processor 120.

The embodiments described in the disclosure may be implemented in a recording medium readable by a computer or a similar device by using software, hardware, or a combination thereof. In hardware-based implementation, operations described in an embodiment may be implemented using at least one of application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and/or other electrical units for performing functions.

An embodiment provides a computer-readable recording medium (or a computer program product) that records a program that causes an electronic device to perform (or execute) various operations. The operations include an operation of providing, based on detection of execution of a satellite service, a pointing interface that induces pointing between the electronic device 101 and a satellite as a full screen of a display, an operation of transmitting a message, based on pointing completion based on the pointing interface, an operation of switching the pointing interface to a first pop-up interface, based on completion of the message transmission, and providing the first pop-up interface as a pop-up, and an operation of, based on a trigger relation to message reception or message transmission, switching the first pop-up interface to a second pop-up interface that induces pointing toward the satellite, and providing the second pop-up interface as a pop-up, and an operation of controlling, interface based on an operational state of a communication circuit, the switching between the first pop-up interface and the second pop-up while providing a satellite service.

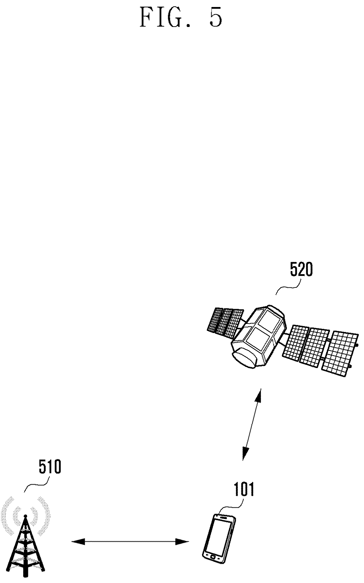

FIG. 5 illustrates an electronic device and a remote communication network environment according to an embodiment.

According to an embodiment, the electronic device 101 may transmit and/or receive data via a terrestrial network and/or a non-terrestrial network.

According to an embodiment, the terrestrial network may refer to a network capable of providing data communication via a terrestrial wireless communication device 510. For example, the terrestrial wireless communication device 510 may include a base station located on the ground (e.g., fixed to the ground). The terrestrial wireless communication device 510 may support at least one communication scheme among various communication schemes that the electronic device 101 may support. For example, the terrestrial wireless communication device 510 may include an eNodeB or a gNodeB, but is not limited to such types.

According to an embodiment, the non-terrestrial network may refer to a network capable of providing data communication via a non-terrestrial wireless communication device 520. For example, the non-terrestrial wireless communication device 520 may include at least one of various communication devices, such as a base station and a repeater, that are not located on the ground. For example, the non-terrestrial wireless communication device 520 may include a satellite and/or an unmanned aerial vehicle, but is not limited to such types. For example, the satellite may include a low-earth orbit (LEO) satellite, a medium-earth orbit (MEO) satellite, a geostationary earth orbit (GEO) satellite, and/or a high elliptical orbit (HEO) satellite.

According to an embodiment, the non-terrestrial wireless communication device 520 may support at least one of various wireless communication schemes. For example, the non-terrestrial wireless communication device 520 may support a NR non-terrestrial network (NR NTN) as defined by the 3rd generation partnership project (3GPP). According to an embodiment, the non-terrestrial wireless communication device 520 may support communication schemes, based on various communication standards such as LTE, global system for mobile communications (GSM), and code-division multiple access (CDMA), but is not limited to such types.

In an embodiment, the terrestrial network and the non- terrestrial network may be independent of each other. According to an embodiment, the terrestrial network and the non- terrestrial network may be included in one or more networks that are associated with each other (e.g., networks provided by the same operator).

According to an embodiment, the electronic device 101 may perform wireless communication via the non-terrestrial network when communication with the terrestrial network is unavailable or unstable. According to an embodiment, the electronic device 101 may, in some cases, perform wireless communication via the non-terrestrial network regardless of the state of communication with the terrestrial network.

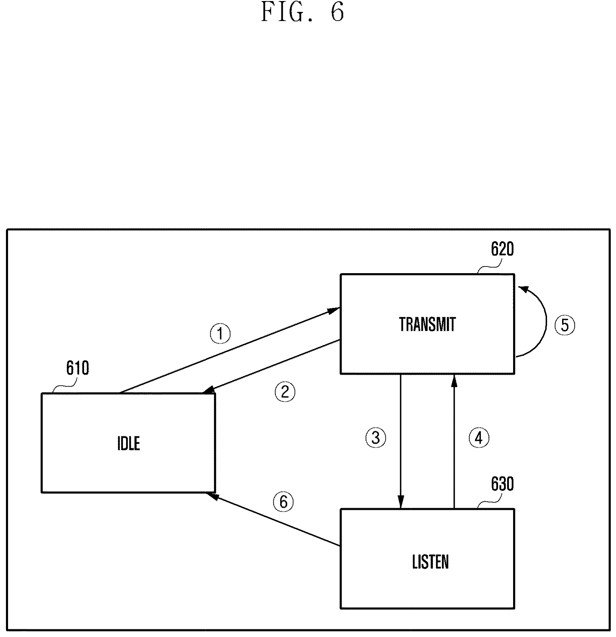

FIG. 6 illustrates the operation of an electronic device according to an embodiment of the disclosure.

According to an embodiment, FIG. 6 may illustrate an example of the operation structure of a communication circuit (e.g., a satellite modem) of an electronic device 101 during execution of a satellite service by the electronic device 101.

According to an embodiment, the communication circuit (e.g., the satellite modem) may include at least three states, such as an idle state 610 (IDLE), a transmit state 620 (TRANSMIT), and a listen state 630 (LISTEN).

According to an embodiment, the idle state 610 may indicate a state in which the electronic device 101 is not communicating with the satellite. According to an embodiment, the idle state 610 may be a state that the communication circuit initially enters when the start of a satellite service is identified in the electronic device 101. According to an embodiment, the idle state 610 may be a state in which the electronic device 101 is waiting for a trigger related to message transmission or message reception during execution of the satellite service.

According to an embodiment, the transmit state 620 may indicate a state in which the electronic device 101 is sending/receiving messages to/from a satellite. According to an embodiment, the transmit state 620 may be a state that the communication circuit enters when the electronic device 101 needs to access (or connect to) a satellite to transmit or receive a message. According to an embodiment, the transmit state 620 may include both a message transmission operation and message reception operation.

According to an embodiment, the listen state 630 may indicate a state in which whether there is a message (e.g., an MT message or a satellite message) to be received by the electronic device 101 is identified. According to an embodiment, the listen state 630 may be a state to which the communication circuit transitions from the transmit state 620. In an embodiment, the communication circuit may transition to the listen state 630 when message transmission or message reception is successful in the transmit state 620, but there is no message (e.g., a message to be received) remaining in a satellite (e.g., a satellite queue (e.g., iridium que (queue))) or there is no message to be transmitted from the electronic device 101 (e.g., a pending message in an application (e.g., a mobile-originated (MO) message)).

According to an embodiment, in the idle state 610, the electronic device 101 may wait for a command from the processor 120, and when the command is input, may perform a relevant operation. For example, the electronic device 101 may transition the communication circuit from the idle state 610 to the transmit state 620 for message transmission or message reception, based on a message transmission operation or a message reception operation being identified in the idle state 610 of the communication circuit (operation ①). According to an embodiment, the message transmission operation may include a mobile-originated (MO) operation for transmitting a message originating from the electronic device 101. According to an embodiment, the message receiving operation may include a mobile-terminated (MT) operation for receiving a message delivered to the electronic device 101 from a satellite.

According to an embodiment, the electronic device 101 may transition the communication circuit from the transmit state 620 to the idle state 610, based on identifying message transmission failure or message reception failure in the transmit state 620 of the communication circuit (operation ②).

According to an embodiment, when message transmission or message reception is additionally identified in the transmit state 620 of the communication circuit, the electronic device 101 may maintain (or repeat) the transmit state 620 (operation ⑤).

According to an embodiment, when message transmission (e.g., MO operation) or message reception (e.g., MT operation) is successful in the transmit state 620 of the communication circuit, but there is no message (e.g., a message to be received) remaining in a satellite (e.g., a satellite queue (e.g., iridium queue)) or there is no message to be transmitted from the electronic device 101 (e.g., a pending message in an application (e.g., a MO message)), the electronic device 101 may transition to the listen state 630 (operation ③).

According to an embodiment, the electronic device 101 may transition the communication circuit from the listen state 630 to the transmit state 620 for message transmission or reception, based on a message transmission operation or a message reception operation being identified in the listen state 630 of communication circuit (operation ④).

According to an embodiment, in the listen state 630, the electronic device 101 may monitor a satellite communication channel to receive a notification message (e.g., a push message, a paging message, a ring, and/or a ring alert) from a satellite. In an embodiment, the notification message may be a message including data indicating whether there is a message to be received from the satellite. For example, the notification message may indicate a notification (or notice) regarding whether there is a message (e.g., an MT message or a satellite message) to be received from the satellite. In an embodiment, the notification message may be received from the satellite without the need for pointing between the electronic device 101 and the satellite.

According to an embodiment, in the listen state 630 of the communication circuit (e.g., the satellite modem), the electronic device 101 may receive a notification message without any satellite pointing operation. For example, the notification message may be a message that is transmitted (e.g., pushed) from the satellite without a request from the electronic device 101.

According to an embodiment, when a time during which a notification for a new message (e.g., an MO message or an MT message) may be received in the listen state 630 has elapsed (e.g., a timeout), the electronic device 101 may transition from the listen state 630 to the idle state 610 (e.g., operation ⑥).

In an embodiment of the disclosure, the electronic device 101 may provide information about a satellite connection state when connected to a satellite. According to an embodiment, the electronic device 101 may, based on the state of the communication circuit, adaptively change and provide the state of an interface (e.g., UI and/or UX) provided according to a satellite service.

According to an embodiment, depending on the state of message transmission/reception, the electronic device 101 may provide a pointing interface when a satellite connection is required, such as in the transmit state 620, and, in the idle state 610, may switch the pointing interface to a reduced pop-up interface and provide the pop-up interface. According to an embodiment, the electronic device 101 may operate to automatically switch an interface (e.g., UI and/or UX), based on the state of the communication circuit (e.g., satellite modem), so as to avoid unnecessary maintenance of a satellite connection and to establish the satellite connection only when an actual satellite connection is required, and thereby provide relevant information.

Thus, the electronic device 101 may simultaneously provide screens of other functions (e.g., messaging and position sharing) performed together with a satellite service, and increase the user accessibility to such other functions even while using the satellite service. According to an embodiment, when pointing is required, the electronic device 101 may provide relevant satellite information so that other tasks are not interrupted even during the provision of a satellite service.

According to an embodiment, the electronic device 101 may provide a designated pointing interface to allow a user to intuitively point to the positions of the satellite and the electronic device 101 during message transmission and message reception. For example, the electronic device 101 may provide a pointing operation through interaction with a user based on the pointing interface. In an embodiment, the pointing interface may be provided including various graphical objects such as a satellite icon and/or a position indicator.

According to an embodiment, the electronic device 101 may provide a pop-up interface (e.g., a first pop-up interface) for satellite pointing in a predetermined area on a screen (e.g., at the top of the screen) after transmitting a message (e.g., an initial message). For example, the electronic device 101 may provide a second pop-up interface for supporting satellite pointing that is fixed at the top of the screen in the transmit state 620 of the communication circuit. According to an embodiment, the electronic device 101 may provide a pointing operation through interaction with a user based on the second pop-up interface. In an embodiment, the second pop-up interface may be provided including various graphical objects such as a satellite icon and/or a position indicator.

According to an embodiment, the electronic device 101 may perform an operation (e.g., a satellite message monitoring operation) of identifying whether there is a message to be received from a satellite during a designated time period in the listen state 630 of the communication circuit. According to an embodiment, when performing the monitoring operation, the electronic device 101 may switch (e.g., reduce) the second pop-up interface, including a satellite icon and/or a position indicator, to the first pop-up interface and provide the first pop-up interface. According to an embodiment, in the listen state 630 for sending (e.g., message transmission), the electronic device 101 may provide the first pop-up interface that provides a guide message (e.g., information about a message transmission state or a message reception state). For example, when the communication circuit is in the listen state 630, the electronic device 101 may provide the first pop-up interface.

According to an embodiment, when the communication circuit enters the idle state 610 after the message transmission/reception operations, the electronic device 101 may switch (e.g., reduce) the second pop-up interface to the first pop-up interface and provide the first pop-up interface. For example, when the communication circuit is in the idle state 610, the electronic device 101 may provide the first pop-up interface.

According to an embodiment of the disclosure, the electronic device 101 may provide a pop-up interface that is fixed at the top of the screen after the message transmission. For example, previously, the electronic device 101 may continuously maintain a pointing guide for pointing even when satellite pointing is unnecessary. However, according to various embodiments of the disclosure, the electronic device 101 may provide satellite information (e.g., a pointing guide) only when satellite pointing is necessary so that other tasks are not interrupted by the pointing guide.

In an embodiment of the disclosure, the electronic device 101 may adaptively provide switching between interfaces for satellite services, based on the state of the communication circuit (e.g., the satellite modem) of the electronic device 101. According to an embodiment, based on interface switching according to the state of the communication circuit, the electronic device 101 may not maintain an unnecessary operation for a satellite connection when the electronic device 101 does not require the satellite connection, and may support an operation for a satellite connection only when the satellite connection is actually required.

The electronic device 101, according to an embodiment of the disclosure, may include a display (e.g., the display module 160 in FIG. 1), a communication circuit (e.g., a satellite modem) configured to support satellite communication with a satellite, processing circuitry, at least one processor operatively connected to the display and the communication circuit (e.g., the processor 120 in FIG. 1, FIG. 3, or FIG. 4), and a memory (e.g., the memory 130 in FIG. 1, FIG. 2, or FIG. 3) configured to store instructions that, when executed individually and/or collectively by the at least one processor, cause the electronic device 101 to perform operations.

According to an embodiment, the instructions, when executed by the at least one processor, may cause the electronic device 101 to provide, based on detection of satellite service execution, a pointing interface that induces pointing between the electronic device 101 and the satellite as a full screen of the display. According to an embodiment, the instructions, when executed by the at least one processor, may cause the electronic device 101 to transmit a message, based on pointing completion based on the pointing interface. According to an embodiment, the instructions, when executed by the at least one processor, may cause the electronic device 101 to switch the pointing interface to a first pop-up interface, based on completing the message transmission, and provide the first pop-up interface as a pop-up. According to an embodiment, the instructions, when executed by the at least one processor, may cause the electronic device 101 to switch, based on a message-related trigger, the first pop-up interface to a second pop-up interface that induces pointing toward the satellite, and provide the second pop-up interface as a pop-up.

According to an embodiment, the instructions, when executed by the at least one processor, may cause the electronic device 101 to control an operational state of the communication circuit based on the message-related trigger.

According to an embodiment, the message-related triggers may include a trigger related to message reception from the satellite or message transmission by the electronic device.

According to an embodiment, the instructions, when executed by the at least one processor, may cause the electronic device 101 to control a transition between the first pop-up interface and the second pop-up interface, based on a transition in the operational state of the communication circuit.

According to an embodiment, the instructions, when executed by the at least one processor, may cause the electronic device 101 to control a transition between the first pop-up interface and the second pop-up interface when the communication circuit transitions from an idle state to a transmit state, when the communication circuit transitions from the transmit state to a listen state, or when the communication circuit transitions from the transmit state to the idle state.

According to an embodiment, the idle state may include a state in which the electronic device 101 is not performing communication with the satellite. According to an embodiment, the transmit state may include a state in which the electronic device 101 receives/sending messages from/to the satellite. According to an embodiment, the listen state may include a state in which whether is a message to be received by the electronic device 101 from the satellite is identified.

According to an embodiment, the instructions, when executed by the at least one processor, may cause the electronic device 101 to provide the first pop-up interface when the communication circuit is in the idle state or the listen state. According to an embodiment, the instructions, when executed by the at least one processor, may cause the electronic device 101 to provide the second pop-up interface when the communication circuit is in the transmit state.

According to an embodiment, the instructions, when executed by the at least one processor, may cause the electronic device 101 to provide the first pop-up interface, in a reduced form, on an application screen when the communication circuit is in the idle state or the listen state. According to an embodiment, the instructions, when executed by the at least one processor, may cause the electronic device 101 to provide the second pop-up interface, in an expanded form, on an application screen in the transmit state, and to support satellite pointing, based on the second pop-up interface.

According to an embodiment, the instructions, when executed by the at least one processor, may cause the electronic device 101 to receive a notification message from the satellite in the listen state of the communication circuit.

According to an embodiment, the notification message may include a message indicating whether there is a message to be received from the satellite.

According to an embodiment, the instructions, when executed by the at least one processor, may cause the electronic device 101 to receive a notification message from the satellite, wherein the notification message may include a message that is pushed from the satellite, regardless of the pointing between the electronic device 101 and the satellite.

According to an embodiment, the instructions, when executed by the at least one processor, may cause the electronic device 101 to identify a message to be received, based on the notification message, in a listen state of the communication circuit, or to control the operational state of the communication circuit to transition from the listen state to the transmit state, based on message transmission being requested in the listen state.

According to an embodiment, the instructions, when executed by the at least one processor, may cause the electronic device 101 to control the operational state of the communication circuit to transition from the listen state to the idle state, based on the elapse of a designated time in the listen state of the communication circuit.

According to an embodiment, the instructions, when executed by the at least one processor, may cause the electronic device 101 to detect execution of the satellite service, based at least on a user input based on a designated object for entering the satellite service, or on the electronic device 101 not being connected to a terrestrial network when emergency service execution is requested in a designated application.

According to an embodiment, the instructions, when executed by the at least one processor, may cause the electronic device 101 to perform satellite pointing through interaction with a user based on the pointing interface, to perform message transmission based on completion of the satellite pointing, to switch, when the message transmission is successful, the pointing interface to the first pop-up interface and provide the first pop-up interface on a part of an application screen, and to provide information about completion of the message transmission, based on the first pop-up interface.

According to an embodiment, the instructions, when executed by the at least one processor, may cause the electronic device 101 to, when the message transmission is successful, control the communication circuit to transition from a transmit state to a listen state, to receive a notification message from the satellite in the listen state of the communication circuit, to switch, based on receiving the notification message, the first pop-up interface to the second pop-up interface and provide the second pop-up interface on the application screen, to control the communication circuit to transition from the listen state to the transmit state, and to perform satellite pointing through interaction with a user based on the second pop-up interface.

According to an embodiment, the pointing interface and the second pop-up interface may include visual information related to an affordance object, a position indicator, a satellite icon, and/or a guide, all of which help guide the user's satellite pointing.

The following describes in detail a method for operating the electronic device 101 in various embodiments. The operations performed in the electronic device 101 according to various embodiments may be executed by the processor 120, which may include various types of processing circuitry and/or executable program elements, in the electronic device 101. According to an embodiment, the operations performed by the electronic device 101 may be stored as instructions in the memory 130, and may be executed by the processor 120 individually and/or collectively.

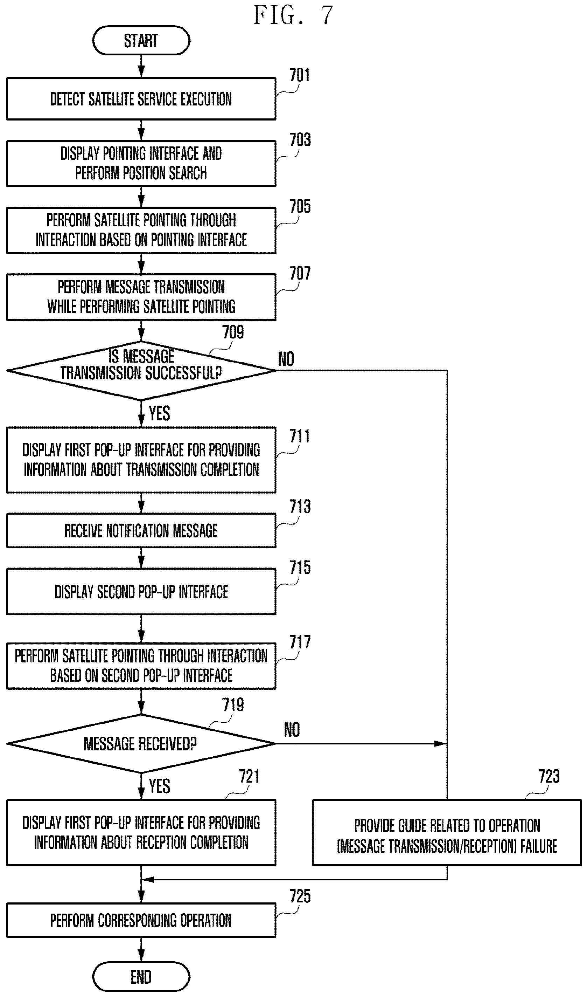

FIG. 7 is a flowchart illustrating a method for operating an electronic device according to an embodiment of the disclosure.

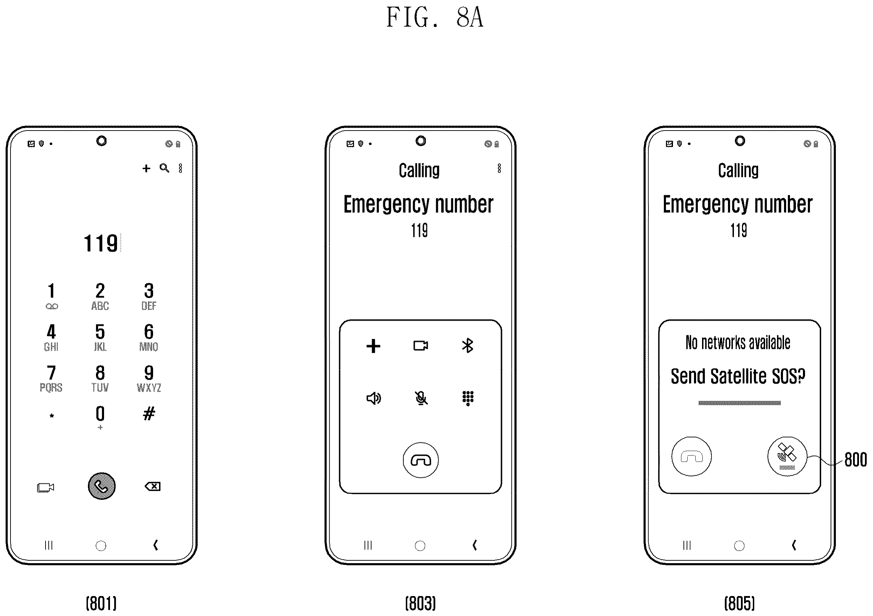

FIGS. 8A to 15 illustrate interfaces and interface-based operations related to supporting satellite services in an electronic device according to an embodiment of the disclosure.

According to an embodiment, FIG. 7 may illustrate an example of a method for supporting satellite communication (e.g., a satellite service and/or an emergency service) in an electronic device 101 according to an embodiment.

In an electronic device 101 according to an embodiment of the disclosure, the method of supporting satellite communication may be performed, for example, according to the flowchart illustrated in FIG. 7. The flowchart illustrated in FIG. 7 is an example according to an embodiment of operations of the electronic device 101 according to an embodiment. The order of at least some operations may be changed, or the at least some operations may be performed in parallel, or performed as independent operations. Alternatively, at least some other operations may be performed complementarily to the at least some operations. According to an embodiment of the disclosure, operations 701 to 725 may be performed by at least one processor (e.g., the processor 120 in FIG. 1, 3, or 4) of the electronic device 101.

As illustrated in FIG. 7, an operation method performed by the electronic device 101 according to an embodiment may include: detecting execution of a satellite service (701), displaying a pointing interface and performing a position search (703), and performing satellite pointing through interaction based on the pointing interface (705), performing message transmission while performing the satellite pointing (707), determining whether the message transmission is successful (709), providing, when the message transmission fails, a guide related to the operation failure (723), displaying a first pop-up interface for providing information about completion of the transmission when the message transmission is successful (711), receiving a notification message (713), displaying a second pop-up interface (715), performing satellite pointing through an interaction based on the second pop-up interface (717), determining whether a message has been received (719), providing, when the message reception fails, a guide related to the operation failure (723), displaying a first pop-up interface for providing information about completion of the reception when the message reception is successful (721), and performing the operation after providing the information or the guide (725).

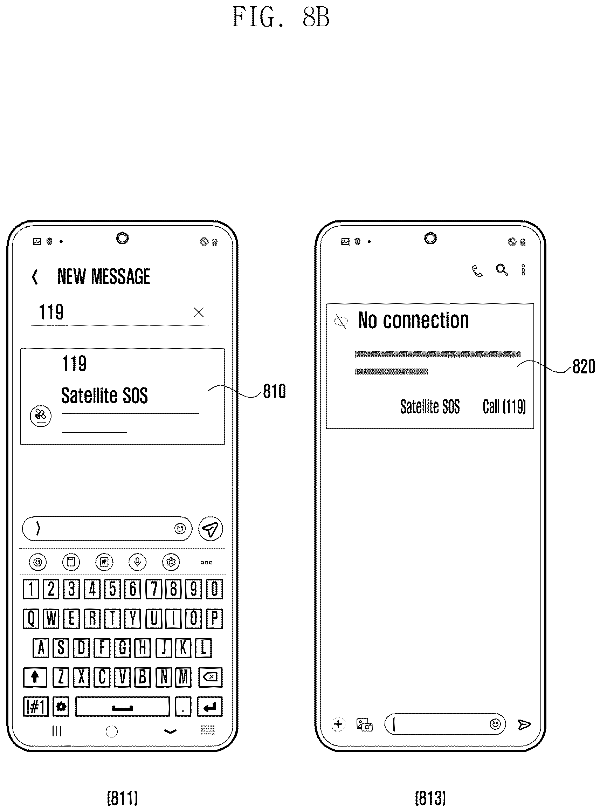

Referring to FIG. 7, in operation 701, the processor 120 of the electronic device 101 may perform an operation of detecting execution of a satellite service. According to an embodiment, the processor 120 may execute an application (e.g., an emergency service application or a satellite service application), based on a user input. According to an embodiment, the application may be an application that can directly execute a satellite service, or a related application that can execute an emergency service. According to an embodiment, an example of an application being executed is illustrated in FIGS. 8A and 8B.

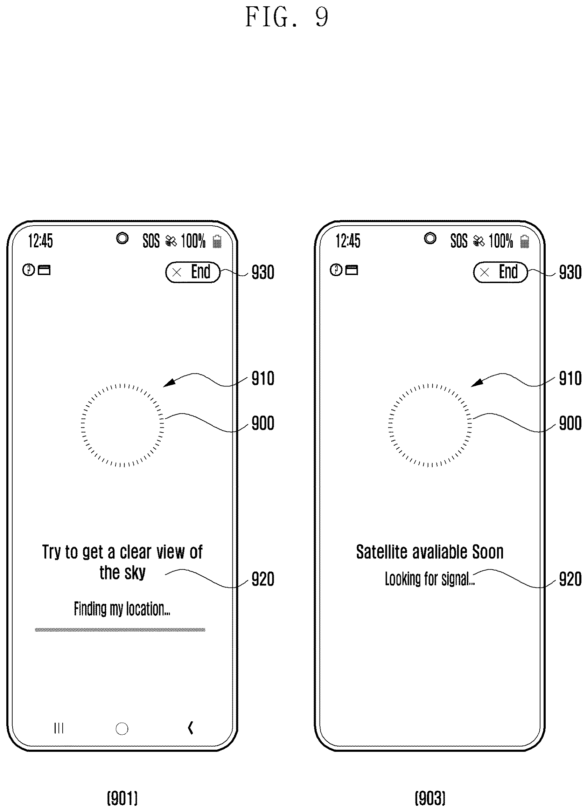

In operation 703, the processor 120 may perform operations according to displaying a pointing interface and searching for a position. According to an embodiment, the processor 120 may execute (or activate or turn on) a communication circuit (e.g., a satellite modem) for satellite communication, based on detecting the execution of a satellite service. According to an embodiment, the processor 120 may perform an operation of searching for positions of the electronic device 101 and a satellite, based on the execution of the communication circuit, and may provide a pointing interface that includes a guide related to position search. According to an embodiment, the processor 120 may control a display (e.g., the display module 160 in FIG. 1) to display the pointing interface in response to the execution of the satellite service. According to an embodiment, an example related to providing a position search and a related guide is illustrated in FIG. 9.

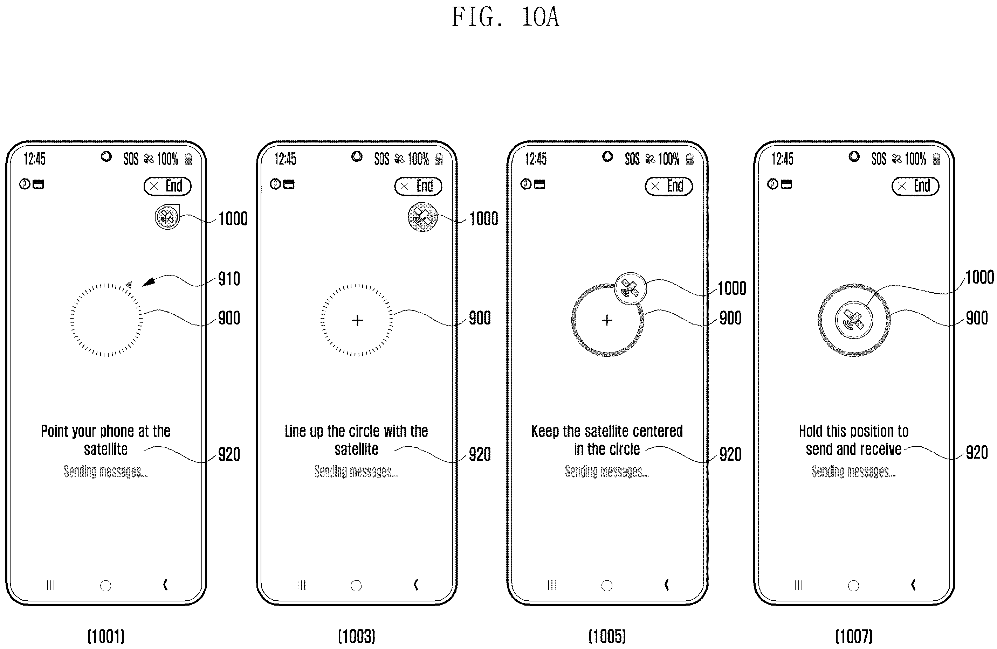

In operation 705, the processor 120 may perform satellite pointing through an interaction based on the pointing interface. According to an embodiment, the processor 120 may perform a pointing operation when completing the position search, and may provide various types of visual information (or objects) related to the pointing operation via the pointing interface. According to an embodiment, the processor 120 may guide (or induce) the user to perform the satellite pointing through an interaction with a user based on the pointing interface. According to an embodiment, an example related to providing a pointing interface for performing the satellite pointing operation is illustrated in FIG. 10A.

In operation 707, the processor 120 may perform an operation of transmitting a message while the satellite pointing is performed. According to an embodiment, when the satellite pointing is completed, the processor 120 may perform an operation of transmitting a designated message to a satellite by using a designated communication circuit (e.g., a satellite modem). According to an embodiment, the processor 120 may perform an operation of transmitting a designated message to the satellite by using the designated communication circuit (e.g., the satellite modem), while performing the satellite pointing.

In operation 709, the processor 120 may perform an operation of determining whether the message transmission is successful. According to an embodiment, the processor 120 may perform message transmission and determine whether the message transmission is successful.

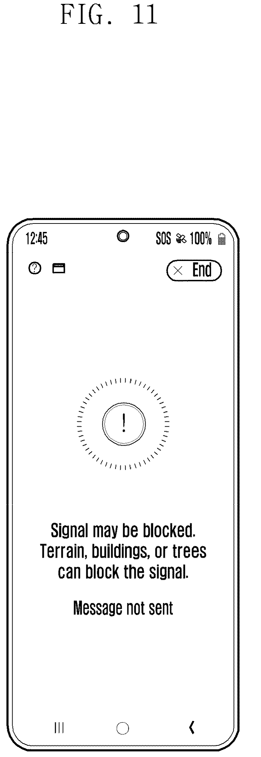

When the processor 120 determines, in operation 709, that the message transmission fails (e.g., "No" in operation 709), the processor 120 may provide a guide related to the operation failure in operation 723. According to an embodiment, when the message transmission fails, the processor 120 may perform an operation of providing a guide related to the operation failure. According to an embodiment, when transmission of a message (e.g., an initial message) fails, the electronic device 101 may provide designated visual information related to the failure. According to an embodiment, an example related to providing an interface according to the message transmission failure is illustrated in FIG. 11.

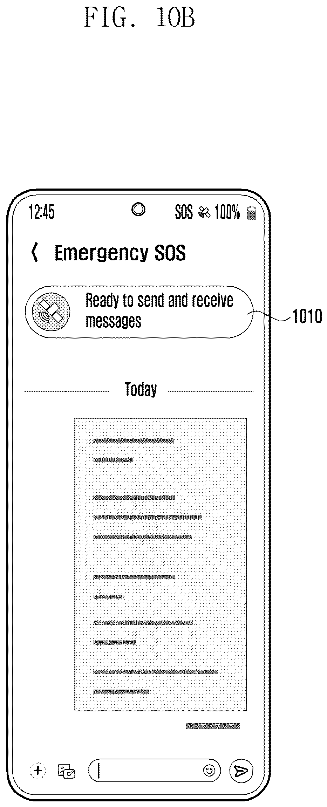

When it is determined, in operation 709, that the message transmission is successful (e.g., "Yes" in operation 709), the processor 120 may perform, in operation 711, an operation of displaying a first pop-up interface which provides information about the transmission completion. According to an embodiment, when the message transmission is successful, the processor 120 may switch the pointing interface to the first pop-up interface and provide the information about the transmission complete on a portion of the screen of an application (e.g., a messaging application). For example, the processor 120 may stop displaying the pointing interface and display the first pop-up interface on a portion of the screen of the application (e.g., the messaging application) to provide a relevant guide indicating readiness for message transmission and reception. According to an embodiment, an example related to providing an interface according to successful message transmission is illustrated in FIG. 10B.

In operation 713, the processor 120 may perform an operation of receiving a notification message. According to an embodiment, the processor 120 may receive, via the communication circuit (e.g., the satellite modem), a notification message (e.g., a push message, a paging message, a ring, and/or a ring alert) that is pushed from a satellite. In an embodiment, the processor 120 may monitor a satellite communication channel to receive the notification message from the satellite. In an embodiment, the notification message may be a message that includes data indicating whether there is a message to be received from the satellite. For example, the notification message may indicate a notification (or notice) of whether there is a message (e.g., an MT message or a satellite message) to be received from the satellite. In an embodiment, the notification message may be received from the satellite without the need for pointing between the electronic device 101 and the satellite. According to an embodiment, the processor 120 may receive a notification message without any satellite pointing operation when the communication circuit (e.g., the satellite modem) is in a listen state. For example, the notification message may be a message that is transmitted (e.g., pushed) from the satellite without a request from the electronic device 101.

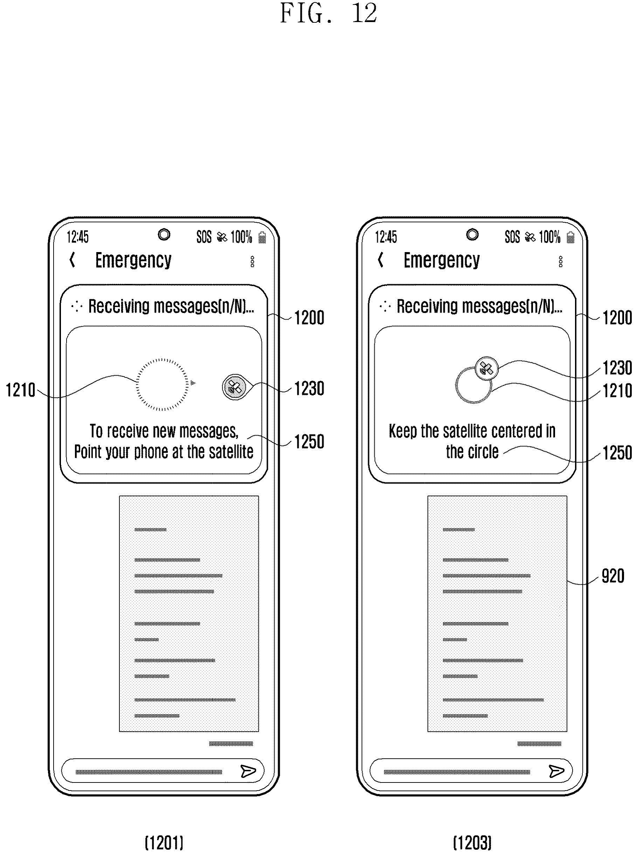

In operation 715, the processor 120 may perform an operation of displaying a second pop-up interface. According to an embodiment, based on receiving the notification message, the processor 120 may switch the first pop-up interface to a second pop-up interface related to the pointing interface, and provide second pop-up interface. According to an embodiment, the processor 120 may provide an interface (e.g., the second pop-up interface) for interacting with a user for satellite pointing on a portion of the screen of an application (e.g., a messaging application). According to an embodiment, the processor 120 may provide the interface changed from the first pop-up interface to the second pop-up interface, and the second pop-up interface may include visual elements related to satellite pointing. According to an embodiment, an example related to providing the second pop-up interface in response to performing a satellite pointing operation is illustrated in FIG. 12.

In operation 717, the processor 120 may perform satellite pointing through an interaction based on the second pop-up interface. According to an embodiment, the processor 120 may perform a pointing operation and may provide various types of visual information (or objects) related to the pointing operation via the second pop-up interface. According to an embodiment, the processor 120 may guide the user to perform the satellite pointing through interaction with the user based on the second pop-up interface. According to an embodiment, an example related to performing a satellite pointing operation by using the second pop-up interface is illustrated in FIG. 12.

In operation 719, the processor 120 may perform an operation to determine whether a message transmitted from a satellite has been received. According to an embodiment, based on completion of the satellite pointing, the processor 120 may determine whether the message reception is successful.

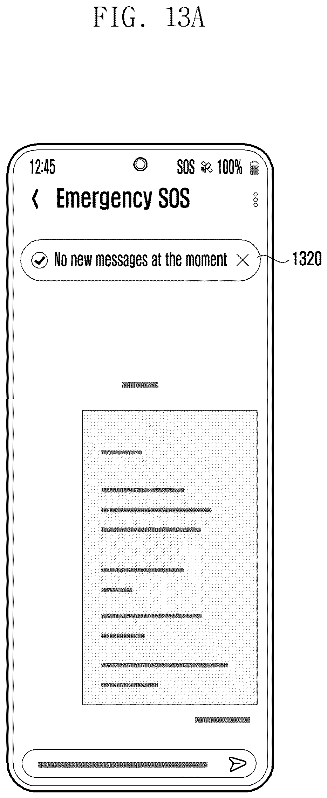

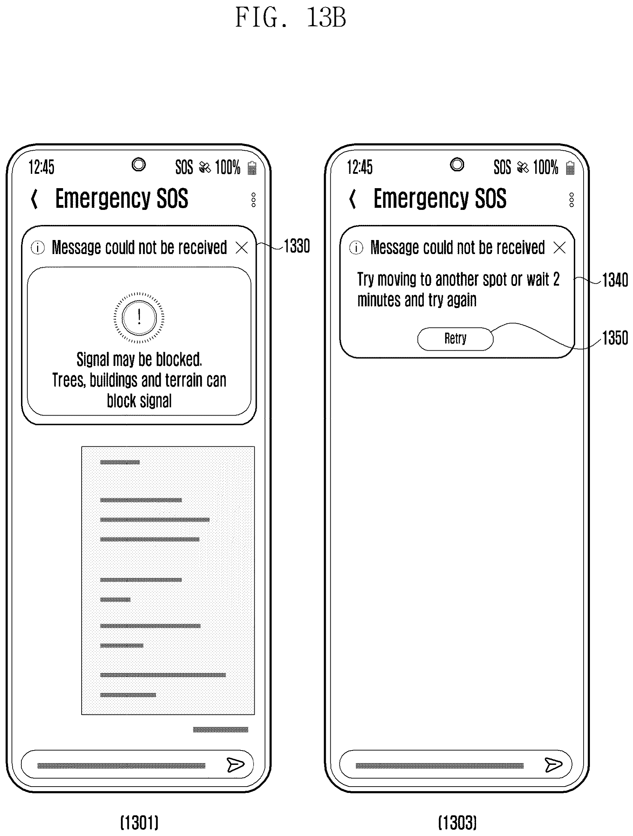

When it is determined, in operation 719, that the message has been received (e.g., "Yes" in operation 719), the processor 120 may perform, in operation 721, an operation displaying the first pop-up interface that provides information about the reception completion. According to an embodiment, when the message reception is successful, the processor 120 may switch the second pop-up interface to the first pop-up interface to provide the information about the reception completion on a portion of the screen of an application (e.g., a messaging application). For example, the processor 120 may display the first pop-up interface on a portion of the screen of the application (e.g., the messaging application) to provide a related guide indicating the message reception. According to an embodiment, an example related to providing an interface according to completion of message reception is illustrated in FIGS. 13A and 13B.

When it is determined, in operation 719, that the message reception fails (e.g., "No" in operation 719), the processor 120 may provide a guide related to the operation failure in operation 723. According to an embodiment, when the message reception fails, the processor 120 may perform an operation of providing a guide related to the operation failure. According to an embodiment, when the message reception fails, the electronic device 101 may provide designated visual information related to the failure. According to an embodiment, an example related to providing an interface according to a message reception failure is illustrated in FIG. 13B.

In operation 725, the processor 120 may perform a corresponding operation after providing the information about the completion of message reception or providing the guide related to the operation failure. According to an embodiment, the processor 120 may continue to perform the operation related to the message transmission and/or performance based on the satellite pointing operation as described above after the message reception is completed, or may perform an operation related to stopping the satellite service or retrying a related operation after the operation failure. According to an embodiment, performing the corresponding operation will be described with reference to the drawings that are to be described later.

FIG. 8A illustrates an example of an interface for supporting the execution of a satellite service in an electronic device according to an embodiment of the disclosure.

Referring to FIG. 8A, FIG. 8A may illustrate an example in which an application (e.g., a phone application) attempts a call connection based on a designated emergency number through which an emergency service can be executed, and provides a guide for entering a satellite service when the call connection fails.

According to an embodiment, as illustrated in example <801>, a user may execute a phone application, and on the execution screen of the application screen, may perform a user input to enter an emergency number (e.g., 911 or 119) and then select a call connection button.

According to an embodiment, the electronic device 101 may, in response to the user input, attempt an emergency call connection and display a related interface (e.g., an emergency call interface indicating the state of the emergency call connection), as illustrated in example <803>.

According to an embodiment, the electronic device 101 may attempt to make an emergency call connection for a designated time, and when the designated time (e.g., N seconds) elapses, the electronic device 101 may, as illustrated in example <805>, stop the emergency call connection attempt and provide an interface including an object 800 (e.g., a satellite icon) for entering a satellite service. According to an embodiment, when no connection is established with a terrestrial network (e.g., a cellular network) at the time of the emergency call connection attempt, the electronic device 101 may directly enter the operation according to example <805> without performing the operation according to example <803>, and provide a corresponding interface.

According to an embodiment, the user may cause the electronic device 101 to execute the satellite service based on the selection of the object 800 (e.g., the satellite icon) for entering the satellite service. For example, the electronic device 101 may execute the satellite service in response to the user input and activate a communication circuit (e.g., a satellite modem) for satellite communication.

FIG. 8B illustrates an example of an interface that supports the execution of a satellite service on an electronic device according to an embodiment of the disclosure.

Referring to FIG. 8B, FIG. 8B may illustrate an example in which an application (e.g., a messaging application) provides a guide for entering a satellite service, based on a designated emergency number through which an emergency service can be executed.

According to an embodiment, as illustrated in example <811>, a user may execute a messaging application, and perform a user input of entering an emergency number (e.g., 911 or 119) on an application execution screen.

According to an embodiment, when a designated emergency number is detected in response to the user input in the messaging application, the electronic device 101 may provide an interface that includes an object 810 (e.g., a satellite icon and/or guide text) for entering a satellite service. According to an embodiment, when there is no connection to a terrestrial network (e.g., a cellular network), the electronic device 101 may provide an interface for entering a satellite service.

According to an embodiment, as illustrated in example <813>, the user may execute the messaging application, and perform a user input of entering an emergency number (e.g., 911 or 119) on the application execution screen .

According to an embodiment, the electronic device 101 may, in response to the user input in the messaging application, provide an interface that includes an object 820 (e.g., a satellite icon and/or guide text) for entering a satellite service when the electronic device 101 is not connected to a terrestrial network (e.g., a cellular network).

According to an embodiment, the user may cause the electronic device 101 to execute a satellite service, based on the selection of an object (e.g., the object 810 or the object 820) for entering the satellite service. For example, the electronic device 101 may execute the satellite service in response to the user input and activate a communication circuit (e.g., a satellite modem) for satellite communication.

In an embodiment, the electronic device 101 may also provide an interface that supports the pre-entry of emergency information (e.g., a questionnaire or survey) for effectively performing emergency services by a satellite, based on the selection of an object (e.g., object 810 or object 820) for entering a satellite service. In an embodiment, the emergency information prepared by the user may be generated based on the user's responses to a questionnaire provided to determine the user's emergency situation. In an embodiment, the electronic device 101 may use the emergency information prefilled by the user to construct a message to be transmitted initially during satellite service.

According to an embodiment, the examples illustrated in FIGS. 8A and 8B may represent examples of a state in which no designated emergency icon (e.g., an SOS icon and/or a satellite icon) corresponding to a satellite service or an emergency service is displayed in an indicator area.

According to an embodiment, the designated emergency icon may be provided via the indicator area, based on the execution of the satellite service or the emergency service. According to an embodiment, the designated emergency icon may be provided via the indicator area regardless of the execution of the satellite service or the emergency service, as long as there is no terrestrial network and the electronic device 101 is in a condition in which satellite connection is possible. In an embodiment, the condition in which satellite connection is possible may include, for example, a condition in which the electronic device 101, including a satellite modem, is located in a satellite connection region, with no terrestrial network to which the electronic device 101 is connected.

According to an embodiment, the designated emergency icon in the indicator area may be displayed regardless of the execution of the satellite service or the emergency service, and may be highlighted by applying an animation effect (e.g., visual que) based on the emergency icon when the satellite function is actually operating.

FIG. 9 illustrates an example of an interface for supporting position search in an electronic device according to an embodiment of the disclosure.

Referring to FIG. 9, FIG. 9 may illustrate an example in which an electronic device 101 provides a satellite connection screen based on a pointing interface in response to execution of a satellite service.

According to an embodiment, when the electronic device 101 executes a satellite service, the electronic device 101 may perform a position search for the electronic device 101 and a satellite and provide a pointing interface as illustrated in examples <901> and <903>. For example, examples <901> and <903> may represent examples of an initial pointing interface that includes a satellite connection screen.

According to an embodiment, the pointing interface may include a first area 910 and a second area 920. In an embodiment, the first area 910 may be a first view area (e.g., a pointing guidance area) for inducing (or guiding) a user to perform pointing. In an embodiment, the second area 920 may be a second view area (e.g., a guide display area) for providing guide information (e.g., a message) corresponding to an ongoing pointing operation. According to an embodiment, the pointing guidance area may be provided based on a graphical object, but is not limited thereto. According to an embodiment, the guide display area may be provided based on a text object, but is not limited thereto.

As illustrated in example <901>, the electronic device 101 may search for a position of the electronic device 101, and provide a pointing interface that includes an interface indicating that position searching is in progress while searching for the position of the electronic device 101. For example, as illustrated in example <901>, the interface may include an affordance object 900 for pointing guidance in the first area 910 and a guide (e.g., "Try to get a clear view of the sky" and "Finding my location ...") related to searching for the position of the electronic device 101 in the second area 920.

As illustrated in example <903>, when the position of the electronic device 101 is found, the electronic device 101 may search for the position of a satellite, and may provide a pointing interface that includes an interface indicating that position searching is in progress while searching for the position of the satellite. For example, as illustrated in example <903>, the interface may include an affordance object 900 (e.g., a position identifier indicating the position of the electronic device 101) in the first area 910 for pointing guidance, and a guide (e.g., "Satellite available Soon" and "Looking for signal ...") related to searching for the position of the satellite in the second area 920.

According to an embodiment, as illustrated in example <901> and example <903>, the pointing interface may include a termination object 930 (e.g., an End button) for stopping entry into the satellite service (or pointing) (or ending the satellite service). For example, a user may select the termination object 930 to terminate the related operation for the satellite service.

FIG. 10A illustrates an example of an interface for supporting satellite pointing in an electronic device according to an embodiment of the disclosure.

Referring to FIG. 10A, FIG. 10A may illustrate an example of an interface that the electronic device 101 provides while interacting with a user via a pointing interface to perform a pointing operation for satellite pointing.

According to an embodiment, when the position of a satellite is founded by performing a position search, the electronic device 101 may include and provide a satellite icon 1000 in a pointing interface, as illustrated in example <1001>. According to an embodiment, the pointing interface may further include, in addition to the satellite icon 1000, a position indicator (e.g., a triangle icon, an arrow, or a direction indication icon) that indicates a direction in which the satellite is located. In an embodiment, the position indicator may indicate a direction in which an antenna of the electronic device 101 is required to be pointed (or moved). According to an embodiment, the satellite icon 1000 may be provided in association with the affordance object 900 in the first area 910 based on a direction (e.g., azimuth angle and/or elevation angle) corresponding to the found position of the satellite. In an embodiment, the azimuth angle may be directional information indicating whether the satellite is located to the left or right of the electronic device 101. In an embodiment, the elevation angle may be directional information indicating whether the satellite is located above or below, based on the tilt of the electronic device 101.

According to an embodiment, the satellite icon 1000 may be provided in a corresponding area (e.g., the top-right portion of a screen in example <1001>) to indicate a direction corresponding to the position of the satellite relative to the affordance object 900. According to an embodiment, the position indicator may be provided around the affordance object 900 (e.g., adjacent to the outer edge of a circle icon) to indicate the direction corresponding to the found position of the satellite.

According to an embodiment, a user may perform a user input (or a gesture) to move the electronic device 101 up, down, left, or right based on the position of the satellite icon 1000 provided via the pointing interface. For example, the user may rotate the electronic device 101 to face a left direction or a right direction, and/or adjust the degree of tilt of the electronic device 101 to face upward or downward. For example, the user may perform an interaction to adjust the direction of the electronic device 101 in response to correspond to the satellite icon 1000 of the pointing interface.

According to an embodiment, the electronic device 101 may provide visual information about a change in pointing, based on the user input (e.g., the gesture). According to an embodiment, as illustrated in examples <1001>, <1003>, <1005>, and <1007>, in response to manipulation of the electronic device 101 based on user input, the electronic device 101 may visually provide a change in pointing between the electronic device 101 and the satellite. According to an embodiment, as the electronic device 101 approaches a direction corresponding to the satellite (e.g., approaches pointing), the electronic device 101 may change the size of the satellite icon 1000 (e.g., increase the size of the icon in response to the proximity information). According to an embodiment, as the electronic device 101 approaches the direction corresponding to the satellite, the electronic device 101 may provide visual information (e.g., an animation effect) in which the satellite icon 1000 moves toward (or approaches) the affordance object 900 (e.g., the circle icon). According to an embodiment, as the electronic device 101 approaches the direction corresponding to the satellite, the electronic device 101 may provide a highlighting (or color) change (e.g., a spreading effect) in the surrounding color (e.g., background color) in response to the change in the satellite icon 1000.

According to an embodiment, when the pointing between the electronic device 101 and the satellite is nearing completion, the electronic device 101 may display the satellite icon 1000 that overlaps (or is superposed on) the border of the affordance object 900 (e.g., the border of the circle icon), as illustrated in example <1005>. According to an embodiment, the electronic device 101 may highlight the satellite icon 1000 by changing the color of the satellite icon 1000 (e.g., inversion between the inside and outside colors) based on the satellite icon 1000 being located on the border of the affordance object 900.

According to an embodiment, when the pointing is completed between the electronic device 101 and the satellite, the electronic device 101 may position and display the satellite icon 1000 in the affordance object 900 (e.g., at the center of a circle), as illustrated in example <1007>.

According to an embodiment, as illustrated in examples <1001>, <1003>, <1005>, and <1007>, the electronic device 101 may visually provide changes in the pointing between the electronic device 101 and the satellite, while providing, based on the second area 920, a guide (e.g., a message) corresponding to each of the changes in pointing.

FIG. 10B illustrates an example of an interface provided by an electronic device according to an embodiment of the disclosure based on successful satellite pointing.

Referring to FIG. 10B, FIG. 10B illustrates an example of a screen interface provided when satellite pointing based on a pointing interface is completed and message sending is successful.

According to an embodiment, the electronic device 101 may, based on completing a satellite pointing operation, send a message to a satellite connected based on the satellite pointing completion. According to an embodiment, when the message sending is successful, the electronic device 101 may transition the pointing interface, as described with reference to FIG. 10A, to a pop-up interface 1010 and provide the pop-up interface 1010. For example, the electronic device 101 may collapse the pointing interface and provide the pop-up interface 1010 on a portion of an application (e.g., a messaging application) screen.

According to an embodiment, the pop-up interface 1010 may include a related guide (e.g., Ready to send and receive messages) indicating that the electronic device is ready for message transmission and reception in response to the successful message sending. According to an embodiment, the guide may be provided based on icons and/or text.

According to an embodiment, the electronic device 101 may operate to terminate a satellite service, based on a screen interface for supporting termination of the satellite service while performing the satellite service and a user input using the screen interface.

According to an embodiment, the electronic device 101 may provide a termination object (e.g., an "X" object) via the pop-up interface 1010 and may support an operation of terminating the satellite service, based on a user input based on the termination object. According to an embodiment, a user may select the termination object provided via the pop-up interface 1010 to terminate the satellite service.

FIG. 11 illustrates an example of an interface provided by an electronic device according to an embodiment of the disclosure in response to satellite pointing failure.

Referring to FIG. 11, FIG. 11 illustrates an example of a screen interface provided in case of a satellite pointing failure or a message sending failure.

According to an embodiment, when the satellite pointing fails and/or when the transmission of a message (e.g., an initial message) fails, the electronic device 101 may provide designated visual information related to the failure, as illustrated in FIG. 11. The designated visual information related to the failure may include, for example, a graphical element that may intuitively represent the failure, along with a related guide (e.g., a failure guide) (e.g., "Signal may be blocked. Terrain, buildings, or trees can block the signal. Message not sent" or "Message wasn't sent").

According to an embodiment, in the event of satellite pointing failure and/or message transmission failure, the electronic device 101 may provide a user with an object (e.g., a "Try again" button) that supports retrying a corresponding operation. According to an embodiment, the user may use the "Try again" button to command the electronic device 101 to retry satellite pointing and/or message transmission.

FIG. 12 illustrates an example of an interface for supporting satellite pointing in an electronic device according to an embodiment of the disclosure.

Referring to FIG. 12, FIG. 12 may illustrate an example of an interface that the electronic device 101 may provide while interacting with a user via a second pop-up interface 1200 to perform a pointing operation for satellite pointing.

In an embodiment, the electronic device 101 may receive a notification message pushed from a satellite while switching to and providing a first pop-up interface in response to successful message transmission. In an embodiment, the notification message may be a message that includes data indicating whether a message to be received from the satellite exists. For example, the notification message may indicate a notification (or notice) of whether a message (e.g., an MT message or a satellite message) to be received from the satellite exists. According to an embodiment, the electronic device 101 may receive the notification message in a listen state of a communication circuit (e.g., a satellite modem) without any satellite pointing operation.

According to an embodiment, as illustrated in example <1201> and example <1203>, the electronic device 101 may include and provide with an affordance object 1210, a satellite icon 1230, and a related guide 1250 in the second pop-up interface 1200. According to an embodiment, the second pop-up interface 1200 may include visual information corresponding to the pointing interfaces as described above and may provide visual information corresponding to each of satellite pointing operations based on the pointing interfaces. For example, the second pop-up interface 1200 may further include, together with the satellite icon 1230, a position indicator (e.g., a triangle icon, an arrow, or a direction indication icon) indicating a direction in which the satellite is located.

According to an embodiment, the satellite icon 1230 may be provided in association with the affordance object 1210, based on a direction (e.g., azimuth angle and/or elevation angle) corresponding to the founded position of the satellite. In an embodiment, the azimuth angle may be directional information indicating whether the satellite is located to the left or right of the electronic device 101. In an embodiment, the elevation angle may be directional information indicating whether the satellite is located above or below relative to the tilt of the electronic device 101.

According to an embodiment, a user may perform a user input (or a gesture) to move the electronic device 101 up, down, left, or right, based on the position of the satellite icon 1230 provided via the second pop-up interface 1200. For example, the user may rotate the electronic device 101 to face a left direction or a right direction, and/or adjust the degree of tilt of the electronic device 101 to face an upward direction or a downward direction. For example, the user may perform an interaction to adjust the direction of the electronic device 101 so as to correspond to the satellite icon 1230 in the second pop-up interface 1200.

According to an embodiment, the electronic device 101 may provide, based on the user input (e.g., the gesture), visual information according to a pointing change. According to an embodiment, the electronic device 101 may provide visual information according to the pointing change, through an operation corresponding to the operations described in the description made with reference to examples <1001>, <1003>, <1005>, and <1007> in FIG. 10A. For example, the electronic device 101 may visually provide a change in pointing between the electronic device 101 and the satellite in response to manipulation of the electronic device 101 according to the user input.

According to an embodiment, as illustrated in example <1203>, as the electronic device 101 approaches a direction corresponding to the satellite (e.g., approaches pointing), the electronic device 101 may change the size of the satellite icon 1230 (e.g., increase the size of the icon in response to the proximity information). According to an embodiment, as the electronic device 101 approaches the direction corresponding to the satellite, the electronic device 101 may provide visual information (e.g., an animation effect) in which the satellite icon 1230 moves toward (or approaches) the affordance object 1210 (e.g., a circle icon). According to an embodiment, as the electronic device 101 approaches the direction corresponding to the satellite, the electronic device 101 may provide a highlighting (or color) change (e.g., a spreading effect) in the surrounding color (e.g., background color) in response to the change in the satellite icon 1000.

According to an embodiment, when the pointing between the electronic device 101 and the satellite is nearing completion, the electronic device 101 may display the satellite icon 1230 that overlaps (or is superposed on) on a border of the affordance object 1210 (e.g., the border of the circle icon), as illustrated in example <1203>. According to an embodiment, the electronic device 101 may highlight the satellite icon 1230 by changing the color of the satellite icon 1230 (e.g., inversion between the inside and outside colors), based on the satellite icon 1230 being located on the border of the affordance object 1210.

According to an embodiment, when the pointing between the electronic device 101 and the satellite is completed, the electronic device 101 may position and display the satellite icon 1230 in the affordance object 1210 (e.g., at the center of a circle).

According to an embodiment, as illustrated in example <1201> and example <1203>, the electronic device 101 may visually provide the changes in pointing between the electronic device 101 and the satellite, while providing a guide (e.g., a message) corresponding to each of the changes in pointing.

According to an embodiment, a detailed operation in which in the electronic device 101 interacts with a user based on the second pop-up interface will be described with reference to the drawings described later.

FIGS. 13A and 13B illustrate examples of interfaces provided by an electronic device according to an embodiment of the disclosure, based on receiving a message.

According to an embodiment, FIGS. 13A and 13B illustrate examples of screen interfaces that are provided when satellite pointing based on the second pop-up interface 1200 is completed and message reception is successful.

According to an embodiment, the electronic device 101 may receive a message from a satellite based on completing a satellite pointing operation. According to an embodiment, when the message reception is completed, the electronic device 101 may switch the second pop-up interface 1200, as illustrated with reference to FIG. 12, to a first pop-up interface and provide the first pop-up interface. For example, the electronic device 101 may collapse the second pop-up interface 1200 and provide the first pop-up interface on a portion of the screen of an application (e.g., a messaging application).

According to an embodiment, the first pop-up interface may include a related guide (e.g., N messages received) indicating that the message has been received according to the successful message reception. According to an embodiment, the guide may be provided based on icons and/or text.

Referring to FIG. 13A, FIG. 13A illustrates an example of a screen interface provided when satellite pointing based on the second pop-up interface 1200 is completed and/or message transmission is completed, and when there is no new message (e.g., a message to be transmitted or a message to be received).

According to an embodiment, when there are no new messages after satellite pointing completion and/or message reception completion, the electronic device 101 may provide, based on a first pop-up interface 1320, a related guide (e.g., No new messages at the moment) indicating the corresponding state. For example, the electronic device 101 may display, based on the first pop-up interface 1320, a notification indicating that there are no new messages, to provide the notification to a user.

Referring to FIG. 13B, FIG. 13B illustrates one example of a screen interface provided when message reception fails.

According to an embodiment, when the electronic device 101 fails to receive a message, the electronic device 101 may provide designated visual information related to the failure, as illustrated in example <1301> and/or example <1303>. The designated visual information related to the failure may include, for example, a related guide (e.g., a failure guide) with graphical elements that may intuitively represent the failure.

According to an embodiment, when the message reception fails, the electronic device 101 may provide, based on a second pop-up interface 1330, a graphical element and a related guide (e.g., "Message could not be received."), which are related to the failure.

According to an embodiment, the electronic device 101 may provide a first pop-up interface 1340 that includes the related guide related to the failure (e.g., "Message could not be received."), a guide that guides the user in manipulation of the electronic device 101 to enable message reception (e.g., "Try moving to another spot or wait 2 minutes and try again"), and an object 1350 (e.g., a "Retry" button). According to an embodiment, the user may select the "Retry" button 1350 and perform an operation corresponding to message reception.

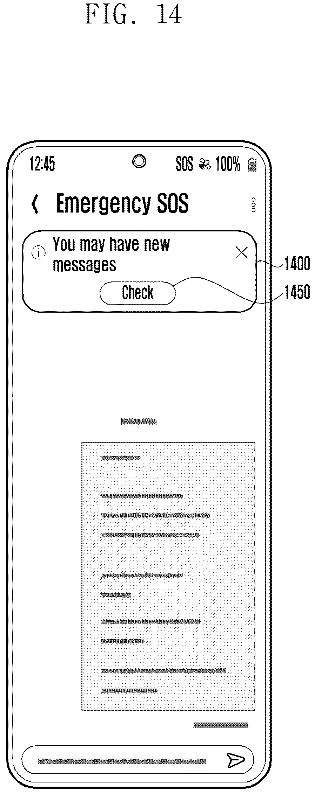

FIG. 14 illustrates an example of an interface provided by an electronic device according to an embodiment of the disclosure, based on expiration of a notification message wait time.

Referring to FIG. 14, FIG. 14 illustrates an example of providing a related guide when, while the electronic device 101 is monitoring a satellite communication channel for receiving a notification message, the notification message is not received and a designated wait time for receiving the notification message expires (e.g., timeout).

According to an embodiment, the electronic device 101 may provide an object 1450 (e.g., a "Check" button) and a guide (e.g., "you may have new messages") which induces a user to check for new messages via a pop-up interface 1400 (e.g., the first pop-up interface) based on a timeout for notification message reception, while displaying a pop-up interface (e.g., the first pop-up interface) that includes the related guide for message transmission/reception, as illustrated in FIG. 10B. According to an embodiment, the user may select the "Check" button 1450 and perform an operation corresponding to message reception.

According to an embodiment, the electronic device 101 may, in response to a user input based on the "Check" button 1450, switch a first pop-up interface 1400 to a second pop-up interface in which a pointing operation for satellite pointing can be performed through an interaction with the user, and provide the second pop-up interface. According to an embodiment, the electronic device 101 may perform the operation for satellite pointing with the user, based on the second pop-up interface.

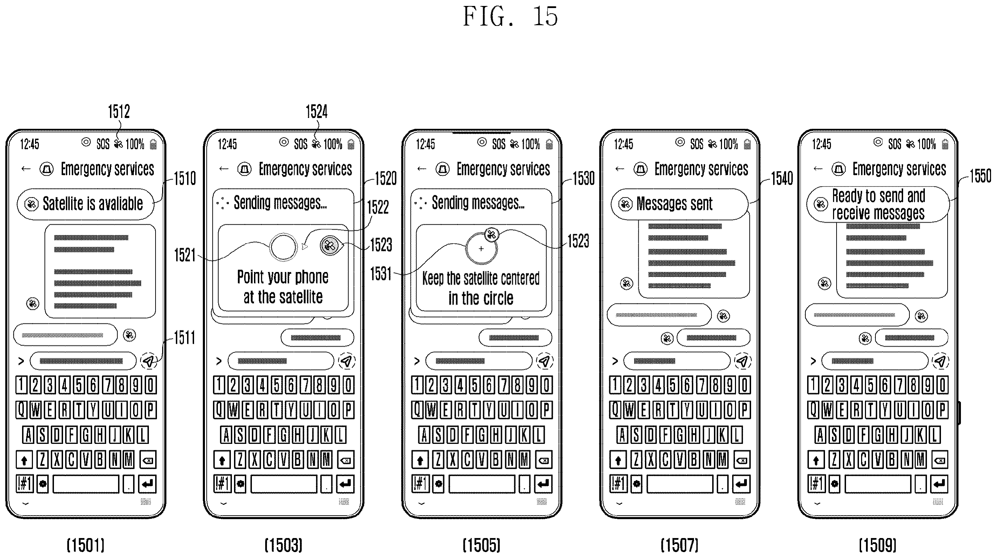

FIG. 15 illustrates an example of an interface for supporting satellite pointing in an electronic device according to an embodiment of the disclosure.

Referring to FIG. 15, FIG. 15 may illustrate an example of an interface that the electronic device 101 provides while interacting with a user via a pop-up interface (e.g., a second pop-up interface 1520 switched from a first pop-up interface 1510) to perform a pointing operation for satellite pointing.

According to an embodiment, as illustrated in example <1501>, the electronic device 101 may display a satellite communication execution screen after detecting execution of a satellite service, or after a successful message transmission (e.g., after the successful message transmission in FIG. 10B). According to an embodiment, the electronic device 101 may enter an idle state, based on detecting the execution of the satellite service, and provide the first pop-up interface 1510. For example, in the idle state, the first pop-up interface 1510 may include a guide message (e.g., "Satellite is available.") related to waiting for a message-related trigger during the executing of the satellite service.

According to an embodiment, in the idle state, the electronic device 101 may use a top indicator area to provide at least one designated object indicating the status of emergency service and satellite service. For example, the designated object may include an SOS icon indicating an emergency service and a satellite icon 1512 indicating a satellite service (e.g., a static satellite icon in a static state without animation).

According to an embodiment, as illustrated in example <1501>, the electronic device 101 may detect a message transmission trigger on the satellite communication execution screen. For example, a user may compose a message via a message input field and request message transmission by using a transmission button 1511 for transmitting the composed message.

According to an embodiment, the electronic device 101 may perform a pointing operation based on the pop-up interface when detecting the message transmission trigger (e.g., the request for transmission of the message composed by a user (e.g., selection of the send button 1511)). According to an embodiment, as illustrated in FIG. 14, the electronic device 101 may also perform a pointing operation based on the pop-up interface when detecting a request to check a new message (e.g., selection of a Check button) made by the user according to a timeout for receiving a notification message. According to an embodiment, FIG. 15 may illustrate an example of performing a pointing operation in response to a request for additional message transmission after successful message transmission.

According to an embodiment, the electronic device 101 may enter a transmit state, based on the message transmission trigger. According to an embodiment, as illustrated in example <1503> and example <1505>, when entering the transmit state, the electronic device 101 may display, in a top indicator area, a satellite icon 1524 indicating that the electronic device 101 is communicating (e.g., transmitting a message). According to an embodiment, the satellite icon 1524 may provide an animation effect in which the color of a portion of the satellite icon is gradually inverted to indicate the transmit state.

According to an embodiment, when entering the transmit state, the electronic device 101 may switch the first pop-up interface 1510 to the second pop-up interface 1520 supporting satellite pointing and provide the second pop-up interface 1520, as illustrated in example <1503>. According to an embodiment, the second pop-up interface 1520 may include and provide a position identifier 1521 (e.g., an affordance object) indicating a position of the electronic device 101, a position indicator 1522 indicating a position of a satellite, and a satellite icon 1523 indicating a direction in which the satellite is located. For example, the position identifier 1521 may be displayed as a circle with a dotted border. According to an embodiment, the second pop-up interface 1520 may include visual information corresponding to the pointing interfaces as described above and may provide visual information corresponding to each of satellite pointing operations based on the pointing interfaces.

According to an embodiment, the user may perform a user input (or a gesture) to move the electronic device 101 up, down, left, or right based on the position of the satellite icon provided via the second pop-up interface 1520. For example, the user may rotate the electronic device 101 to face a leftward or rightward direction, and/or adjust the degree of tilt of the electronic device 101 to face an upward or downward direction. For example, the user may perform an interaction to adjust the direction of the electronic device 101 in response to the position identifier 1521 and the satellite icon 1523 in the pointing interface.

According to an embodiment, the electronic device 101 may provide visual information about the change in pointing, based on the user input (e.g., the gesture). For example, the electronic device 101 may visually provide a change in pointing between the electronic device 101 and the satellite in response to manipulation of the electronic device 101 based on the user input. For example, as the electronic device 101 approaches the position of the satellite, the electronic device 101 may, as illustrated in example <1505>, switch the second pop-up interface 1520 to a second pop-up interface 1530 having updated visual information and provide the second pop-up interface 1530.

According to an embodiment, when the pointing between the electronic device 101 and a satellite is nearing completion, the electronic device 101 may display a satellite icon overlapping (or superposed on) the border of an affordance object (e.g., a position identifier) (e.g., the border of a circle icon). According to an embodiment, as illustrated in example <1505>, based on the proximity of the electronic device 101 to the position of the satellite, the satellite icon 1523 may be provided while overlapping a position identifier 1531 in one area.

According to an embodiment, when the satellite icon 1523 and the position identifier 1531 are provided while overlapping each other in one area, the position identifier 1531 may be displayed as a circle with a solid border, and the satellite icon 1523 may be displayed as an enlarged satellite icon 1523 with inverted colors. For example, the electronic device 101 may highlight the satellite icon 1523 by significantly increasing the size of the satellite icon 1523 and changing the color (e.g., inversion between the inside and outside colors) based on the satellite icon 1523 being located on the border of the position identifier 1531.

According to an embodiment, when the pointing between the electronic device 101 and the satellite is completed, the electronic device 101 may position and display the satellite icon 1523 within the position identifier 1531 (e.g., the affordance object) (e.g., at the center of a circle). According to an embodiment, when the pointing between the electronic device 101 and the satellite is completed, the electronic device 101 may perform an operation of transmitting a message to the satellite via a communication circuit (e.g., a satellite modem).

According to an embodiment, the electronic device 101 may enter a listen state, based on the completion of the message transmission. According to an embodiment, when entering the listen state, the electronic device 101 may switch the second pop-up interface 1530 to a first pop-up interface 1540 or 1550 and provide the first pop-up interface 1540 or 1550.

According to an embodiment, the electronic device 101 may, when completing the message transmission, provide information about the completion of the message transmission, as illustrated in example <1507>.

According to an embodiment, when the message transmission is successful, the electronic device 101 may switch the second pop-up interface 1520 to the first pop-up interface 1540 to provide information about the transmission completion on a portion of the screen of an application (e.g., a messaging application). For example, the electronic device 101 may display the first pop-up interface 1540 on a portion of the screen of the application (e.g., the messaging application) to provide a related guide (e.g., "messages sent") indicating that a message has been transmitted. According to an embodiment, the screen of the application may include information about the transmitted message, including information (e.g., a conversation window) about at least one message previously transmitted or received to or from the satellite.

According to an embodiment, after the message transmission, the electronic device 101 may change the first pop-up interface 1540 to the first pop-up interface 1550, which includes a related guide (e.g., Ready to send and receive messages) indicating readiness for transmitting and receiving new messages, and provide the second pop-up interface 1550.

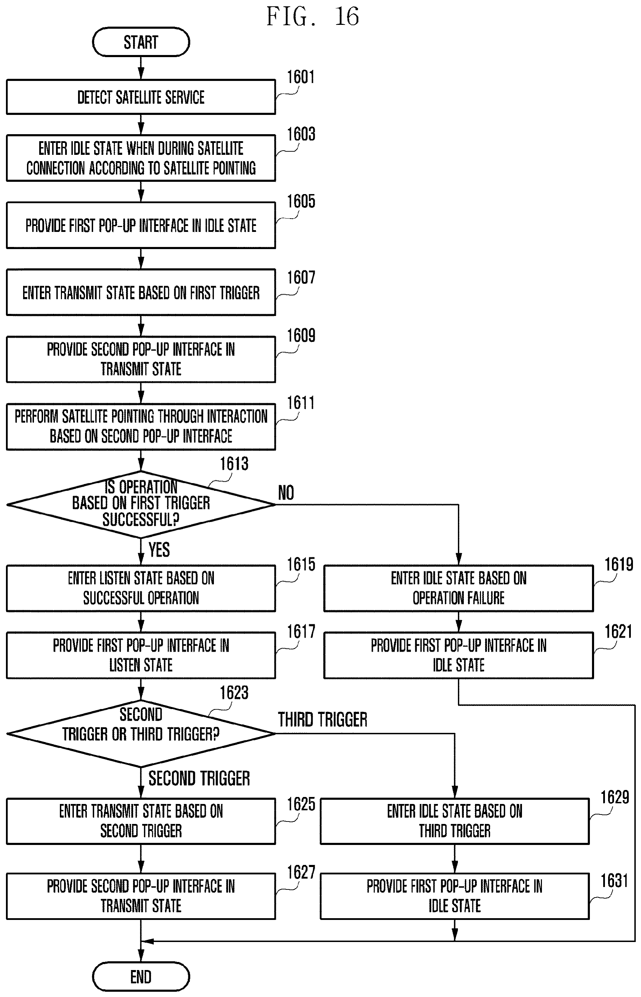

FIG. 16 is a flowchart illustrating a method for operating an electronic device according to an embodiment of the disclosure.

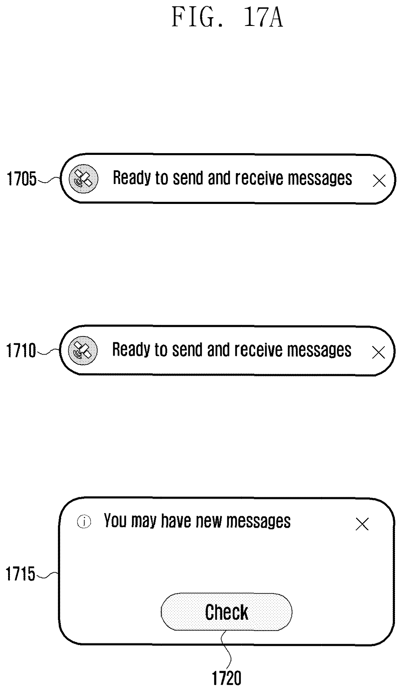

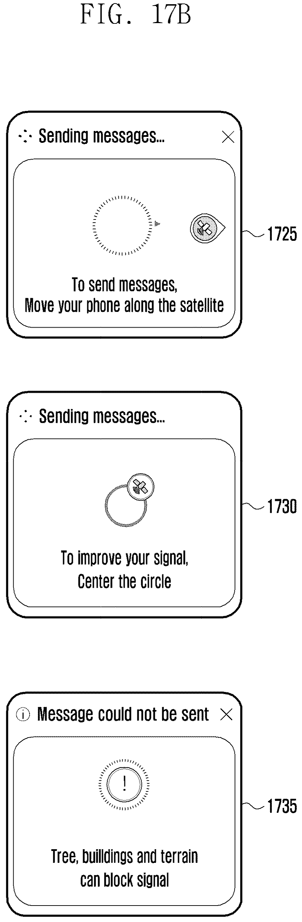

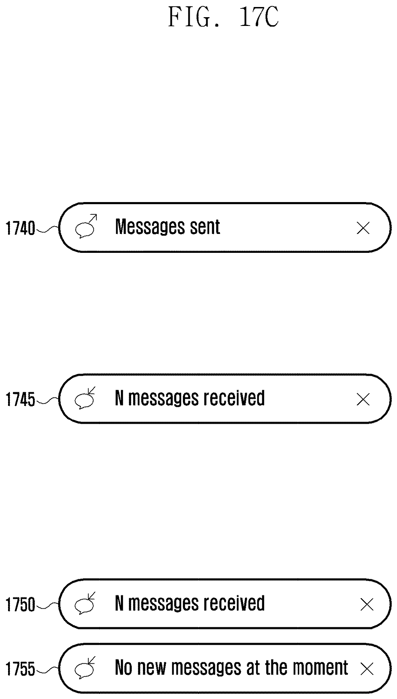

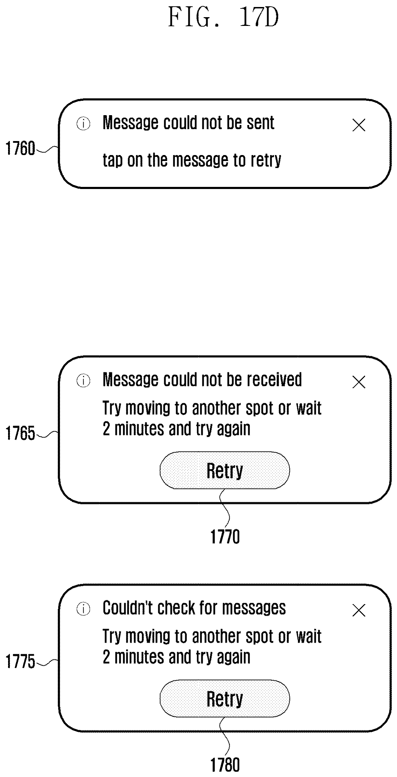

FIGS. 17A, 17B, 17C, and 17D illustrate examples of interfaces provided by an electronic device according to an embodiment of the disclosure, based on the operational state of a communication circuit. According to an embodiment, FIGS. 17A, 17C, and 17D may depict examples of a first pop-up interface provided in an idle or a listen state of a communication circuit (e.g., a satellite modem) and various guides provided via the first pop-up interface. According to an embodiment, FIG. 17B may depict an example of a second pop-up interface that includes various pieces of visual information for supporting a satellite pointing operation in a transmit state of a communication circuit (e.g., a satellite modem).

According to an embodiment, FIG. 16 may depict an example of a method of supporting satellite communication (e.g., a satellite service and/or an emergency service) in the electronic device 101 according to an embodiment. According to an embodiment, FIG. 16 may depict an example of a method for switching and providing an interface, based on the state (e.g., the idle state 610, the transmit state 620, and the listen state 630 in FIG. 6) of a communication circuit (e.g., a satellite modem) of the electronic device 101.

In the electronic device 101 according to an embodiment of the disclosure, a method of supporting satellite communication may be performed, for example, according to the flowchart illustrated in FIG. 16. The flowchart illustrated in FIG. 16 is an example according to an embodiment of operations of the electronic device 101. The order of at least some operations may be changed, or the at least some operations may be performed in parallel, or performed as independent operations. Alternatively, at least some other operations may be performed complementarily to the at least some operations. According to an embodiment of the disclosure, operations 1601 to 1631 may be performed by at least one processor (e.g., the processor 120 in FIG. 1, 3, or 4) of the electronic device 101.

According to an embodiment, the operations described in FIG. 16 may, for example, be heuristically performed in combination with the operations described in FIGS. 6 to 15, or may be heuristically performed as detailed operations of at least some of the described operations.

As illustrated in FIG. 16, an operation method performed by the electronic device 101 according to an embodiment may include detecting execution of a satellite service (1601), entering an idle state during satellite connection based on satellite pointing (1603), providing a first pop-up interface in an idle state (1605), entering a transmit state based on a first trigger (1607), providing a second pop-up interface in the transmit state (1609), performing satellite pointing through an interaction based on the second pop-up interface (1611), and determining whether the operation based on the first trigger is successful (1613), entering a listen state based on the success of the operation (1615), providing the first pop-up interface in the listen state (1617), entering the idle state based on the failure of the operation (1619), providing the first pop-up interface in the idle state (1621), detecting a second trigger or a third trigger (1623), entering the transmit state based on the second trigger (1625), providing the second pop-up interface in the transmit state (1627), entering the idle state based on the third trigger (1629), and providing the first pop-up interface in the idle state (1631).

Referring to FIG. 16, in operation 1601, the processor 120 of the electronic device 101 may perform an operation of detecting execution of a satellite service. According to an embodiment, the processor 120 may execute an application (e.g., an emergency service application or a satellite service application) based on a user input. According to an embodiment, the application may be an application that can directly execute a satellite service or a related application that can execute an emergency service.

In operation 1603, the processor 120 may perform an operation of entering an idle state during satellite connection based on satellite pointing. In an embodiment, the processor 120 may control a communication circuit (e.g., a satellite modem) to enter the idle state during satellite connection. In an embodiment, the idle state (e.g., the idle state 610 in FIG. 6) may indicate a state in which the electronic device 101 is not communicating with the satellite.

In operation 1605, the processor 120 may perform an operation of providing a first pop-up interface in the idle state. According to an embodiment, the processor 120 may provide a user with the first pop-up interface including a first guide related to waiting for message transmission or reception in the idle state of the communication circuit. According to an embodiment, an example of the first pop-up interface including the first guide is illustrated in example <1705> in FIG. 17A. For example, in the idle state of the communication circuit, the processor 120 may provide, via the first pop-up interface, the first guide (e.g., Ready to send and receive messages) indicating readiness for message transmission and reception. In an embodiment, the first pop-up interface may be provided in a partial area of an application execution screen.

In an embodiment, when the first pop-up interface is displayed on a screen other than a message screen, the electronic device 101 may, when detecting a user input (e.g., a tap interaction) based on the first pop-up interface, move to the message screen (e.g., a corresponding chat room) containing an urgent message to identify the message. According to an embodiment, when the first pop-up interface is displayed on the message screen, the electronic device 101 may not support a user input (e.g., a tap interaction) based on the first pop-up interface.

In operation 1607, the processor 120 may perform an operation of entering a transmit state based on a first trigger. According to an embodiment, the processor 120 may control the communication circuit to transition from the idle state to the transmit state. In an embodiment, the transmit state (e.g., the transmit state 620 in FIG. 6) may indicate a state in which the electronic device 101 sends/receives messages to/from a satellite. In an embodiment, the first trigger may include an operation of transmitting a message to the satellite and/or an operation of receiving a message from the satellite.

In operation 1609, the processor 120 may perform an operation of providing a second pop-up interface in the transmit state. According to an embodiment, when the communication circuit transitions to the transmit state, the processor 120 may switch the first pop-up interface to a second pop-up interface in which the processor 120 interacts with the user for satellite pointing. For example, the processor 120 may include, in the second pop-up interface, visual information for performing a satellite pointing operation by interacting with the user, and provide the second pop-up interface to the user.

In operation 1611, the processor 120 may perform satellite pointing through the interaction based on the second pop-up interface. According to an embodiment, the processor 120 may perform a pointing operation and may provide various types of visual information (or objects) related to the pointing operation via the second pop-up interface. According to an embodiment, through the interaction with the user based on the second pop-up interface, the processor 120 may guide (or induce) the user to perform the satellite pointing.

According to an embodiment, an example of the second pop-up interface is illustrated in FIG. 17B. For example, as illustrated in example <1725> and example <1730>, the processor 120 may interact with the user based on the second pop-up interface to include and provide visual information to support pointing. According to an embodiment, when the satellite pointing fails or the message transmission fails in the transmit state of the communication circuit, the processor 120 may interact with the user to provide, based on the second pop-up interface, visual information about the pointing failure or the message transmission failure, as illustrated in example <1735>. According to an embodiment, when the pointing based on the second pop-up interface fails, the processor 120 may transition the communication circuit from the transmit state to the idle state. According to an embodiment, when the pointing based on the second pop- up interface is completed and the message transmission fails, the processor 120 may transition the communication circuit from the transmit state to the idle state. According to an embodiment, upon transitioning to the idle state, the processor 120 may switch the second pop-up interface to the first pop-up interface.

According to an embodiment, when a user input (e.g., a tap interaction) based on the second pop-up interface is detected, the electronic device 101 may switch the second pop-up interface to a full screen to provide the second pop-up interface.

In operation 1613, the processor 120 may perform an operation of determining whether the operation based on the first trigger is successful. According to an embodiment, the first trigger may include a trigger related to successfully performing satellite pointing based on the second pop-up interface in the transmit state of the communication circuit (e.g., the satellite modem) and performing a message transmission operation or a message reception operation in the transmit state. According to an embodiment, the processor 120 may transition the state of the communication circuit from the transmit state to the listen state or the idle state, based on the operation success or operation failure according to the message transmission/reception operation.

When it is determined, in operation 1613, that the operation has been successful with respect to performing the first trigger (e.g., "Yes" in operation 1613), the processor 120 may, in operation 1615, perform an operation of entering the listen state based on the operation success. According to an embodiment, when an operation related to the first trigger is performed and results in success, the processor 120 may control the communication circuit to transition from the transmit state to the listen state. In an embodiment, the listen state (e.g., the listen state 630 in FIG. 6) may indicate a state in which the electronic device 101 identifies whether there is a message to be received.

In operation 1617, the processor 120 may perform an operation of providing the first pop-up interface in the listen state. According to an embodiment, in the listen state of the communication circuit, the processor 120 may include, in the first pop-up interface, a second guide related to the operation success according to the message transmission/reception or a third guide related to waiting for the message transmission/reception, and provide the first pop-up interface to the user.

According to an embodiment, an example of the first pop-up interface including the second guide is illustrated in example <1740> or example <1745> in FIG. 17C. For example, in the listen state of the communication circuit, the processor 120 may provide the first pop-up interface that includes a guide related to successful message transmission (e.g., "messages sent" in example <1740>) or a guide related to successful message reception (e.g., "messages received" in example <1745>). In an embodiment, the first pop-up interface may be provided in a partial area of the application execution screen.

According to an embodiment, an example of the first pop-up interface including the third guide is illustrated in example <1710> in FIG. 17A. For example, in the listen state of the communication circuit, the processor 120 may provide, via the first pop-up interface, a guide (e.g., Ready to send and receive messages) indicating readiness for message transmission and reception, in order to receive a notification message. In an embodiment, the first pop-up interface may be provided in a partial area on the application execution screen.

When it is determined, in operation 1613, that the operation has failed with respect to performing the first trigger (e.g., "no" in operation 1613), the processor 120 may, in operation 1619, perform an operation of entering the idle state based on the operation failure. According to an embodiment, when an operation related to the first trigger is performed and results in failure, the processor 120 may control the communication circuit to transition from the transmit state to the idle state.

In operation 1621, the processor 120 may perform an operation of providing the first pop-up interface in the idle state. According to an embodiment, in the idle state of the communication circuit, the processor 120 may include, in the first pop-up interface, a fourth guide related to an operation failure according to message transmission or a fifth guide that induces the user to retry the pointing operation in response to an operation failure according to message reception, and may provide the first pop-up interface to the user.

According to an embodiment, an example of the first pop-up interface including the fourth guide is illustrated in example <1760> in FIG. 17D. For example, in the idle state of the communication circuit, the processor 120 may provide the first pop-up interface including a guide related to a message transmission failure or a guide that induces the user to retry message transmission (e.g., "Message could not be sent" and "tap on the message to retry" in example <1760>). In an embodiment, the first pop-up interface may be provided in a partial area of the application execution screen.

According to an embodiment, an example of the first pop-up interface including the fifth guide is illustrated in example <1765> in FIG. 17D. For example, in the idle state of the communication circuit, the processor 120 may provide an object 1770 (e.g., a "Retry" button) and a guide (e.g., "Message could not be received", "Try moving to another spot or wait 2 minutes and try again") that induces the user to retry a pointing operation (e.g., to guide the user to manipulate the electronic device 101 so that message reception is possible) in response to an operation failure according message reception. In an embodiment, the first pop-up interface may be provided in a partial area on the application execution screen.

In operation 1623, the processor 120 may perform an operation of detecting a second trigger or a third trigger. In an embodiment, the second trigger may include a trigger related to receiving a notification message for a new message or to a request made by the user to transmit a new message, in the listen state of the communication circuit (e.g., the satellite modem). In an embodiment, the third trigger may include a trigger in which, in the listen state of the communication circuit (e.g., the satellite modem), no notification message is received and a designated wait time for receiving the notification message expires (e.g., timeout).

When the second trigger is detected in operation 1623 (e.g., "Yes" in operation 1623), the processor 120 may, in operation 1625, perform an operation of entering the transmit state, based on the second trigger. According to an embodiment, when the second trigger is detected, the processor 120 may control the communication circuit to transition from the listen state to the transmit state.

In operation 1627, the processor 120 may perform an operation of providing the second pop-up interface in the transmit state. According to an embodiment, when the communication circuit transitions to the transmit state, the processor 120 may switch the first pop-up interface to the second pop-up interface in which interaction with the user is performed for satellite pointing. For example, the processor 120 may include, in the second pop-up interface, visual information for performing a satellite pointing operation through interaction with the user, and provide the visual information to the user. According to an embodiment, the electronic device 101 may perform the satellite pointing operation with the user, based on the second pop-up interface. According to an embodiment, an example of the second pop-up interface is illustrated in FIG. 17B.

According to an embodiment, the processor 120 may transition the communication circuit to the listening state and, when a notification message (e.g., a ring alert) for a new message is received in the listening state, complete satellite pointing and provide, in response to the successful message reception, the first pop-up interface including a related guide (e.g., a message reception guide) indicating that messages have been received (e.g., "N messages received" in example <1750> of FIG. 17C). In an embodiment, the first pop-up interface may be provided in a partial area on the application execution screen.

According to an embodiment, the processor 120 may transition the communication circuit to the listen state and, when a notification message (e.g., a ring alert) for a new message is not received in the listen state, provide the first pop-up interface including a related guide indicating the corresponding state (e.g., "No new messages at the moment" in example <1755> in FIG. 17C). For example, based on the first pop-up interface 1320, the electronic device 101 may display and provide, to the user, a notification indicating that there are no new messages.

When the third trigger is detected in operation 1623 (e.g., "No" in operation 1623), the processor 120 may, in operation 1629, perform an operation of entering the idle state, based on the third trigger. According to an embodiment, when the third trigger is detected, the processor 120 may control the communication circuit to transition from the listen state to the idle state.

In operation 1631, the processor 120 may perform an operation of providing the first pop-up interface in the idle state.

According to an embodiment, when no notification message is received in the listen state of the communication circuit and a designated wait time for receiving a notification message expires (e.g., timeout), the processor 120 may provide the first pop-up interface that includes an object 1720 (e.g., a "Check" button) and a guide (e.g., "You may have new messages" in example <1715> in FIG. 17A), which induces the user to check for new messages in the idle state. According to an embodiment, when no notification message is received in the listen state of the communication circuit and a designated wait time for receiving a notification message expires (e.g., timeout), the processor 120 may provide the first pop-up interface that includes an object 1780 (e.g., a "Retry" button) and a guide (e.g., "Couldn't check for messages" in example <1775> in FIG. 17D, "Try moving to another spot or wait 2 minutes and try again"), which induces the user to check for new messages in the idle state.

According to an embodiment, when the communication circuit (e.g., satellite modem) is in the idle state or the listen state, the electronic device 101 may provide the reduced first pop-up interface in a partial area of an application screen. According to an embodiment, when the communication circuit (e.g., the satellite modem) is in the transmit state, the electronic device 101 may provide the expanded second pop-up interface in a partial area of an application screen, and may support a satellite pointing operation, based on the second pop-up interface.

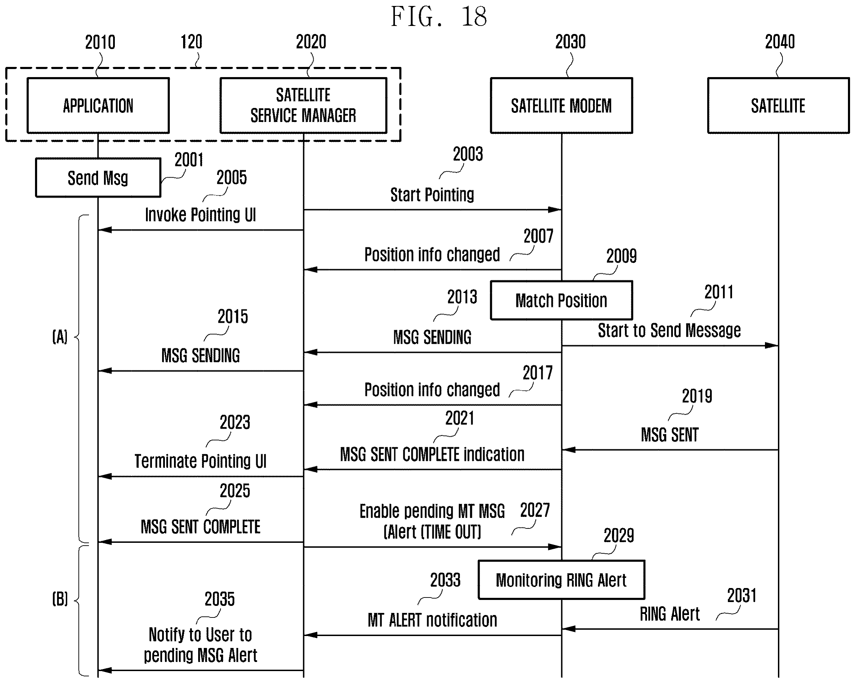

FIG. 18 illustrates an example of providing signal transmission and reception operations between a satellite and an electronic device according to an embodiment of the disclosure, and corresponding interfaces.

According to an embodiment, as illustrated in FIG. 18, the electronic device 101 may include an application 2010, a satellite service manager 2020, and a satellite modem 2030. According to an embodiment, in FIG. 18, the application 2010 and the satellite service manager 2020 may be controlled by the processor 120 of the electronic device 101.

Referring to FIG. 18, the application 2010 may detect a message transmission request (operation 2001). The satellite service manager 2020 may transmit a signal to the satellite modem 2030 to start pointing (e.g., start Pointing) (operation 2003), and may deliver a signal to the application 2010 to invoke a pointing interface (e.g., Invoke Pointing UI) (operation 2005).

The satellite modem 2030 may perform a pointing operation and deliver information about a position changed in the pointing operation (e.g., Position Info changed) to the satellite service manager 2020 in real time (operation 2007 and operation 2017). The satellite modem 2030 may complete pointing with a satellite 2040 (e.g., Match Position) (operation 2009) and start message transmission to the satellite 2040 (e.g., Start to Send Message) (operation 2011). Based on the start of the message transmission, the satellite modem 2030 may deliver related information (e.g., MSG SENDING) about the message transmission start to the application 2010 via the satellite service manager 2020 (operation 2013 and operation 2015).

The satellite modem 2030 may receive a response (e.g., MSG SENT) corresponding to the message transmission from the satellite 2040 (operation 2019), and may deliver information (e.g., MSG SENT COMPLETE indication) indicating completion of the message transmission to the satellite service manager 2020 (operation 2021).

The satellite service manager 2020 may terminate the pointing interface in response to the completion of the message transmission, and may deliver information (e.g., Terminate Pointing UI, MSG SENT COMPLETE) indicating the message transmission completion to the application 2010 (operation 2023 and operation 2025).

The satellite service manager 2020 may deliver, to the satellite modem 2030, information (e.g., Enable pending MT MSG Alert (TIMEOUT)) that instructs the satellite modem 2030 to wait a designated time to receive a notification message (operation 2027).

The satellite modem 2030 may wait to receive a notification message (e.g., a push message, a paging message, a ring, and/or a ring alert) while in a listen state (operation 2029). In the listen state, the satellite modem 2030 may monitor the notification message from the satellite 2040 (e.g., Monitoring RING Alert). In an embodiment, the notification message may be a message that includes data indicating whether there is a message to be received from the satellite. For example, the notification message may indicate a notification (or a notice) about whether there is a message (e.g., an MT message or a satellite message) to be received from the satellite. In an embodiment, the notification message may be received from the satellite without the need for pointing between the electronic device 101 and the satellite. According to an embodiment, the satellite modem 2030 may receive the notification message in the listen state without any satellite pointing operation.

When the satellite modem 2030 receives the notification message (e.g., RING Alert) from the satellite 2040 before the time expiration (operation 2031), the satellite modem 2030 may deliver information about the notification message reception (e.g., an MT ALERT notification) to the satellite service manager 2020 (operation 2033). The satellite service manager 2020 may recognize, through the notification message reception, that there is a message to be received from the satellite 2040, and may deliver, to the application 2010, information (e.g., Notify to User to pending MSG Alert) instructing the application 2010 to notify the user of this (operation 2035).

According to an embodiment, the electronic device 101 may cause the application 2010 to display a pointing interface in operation (A) (e.g., a pointing operation) related to operations 2003 to 2025. According to an embodiment, the electronic device 101 may cause the application 2010 to display a pop-up interface in operation (B) (e.g., an interface switching operation for each state of the satellite modem 2030) related to operations 2007 to 2035.

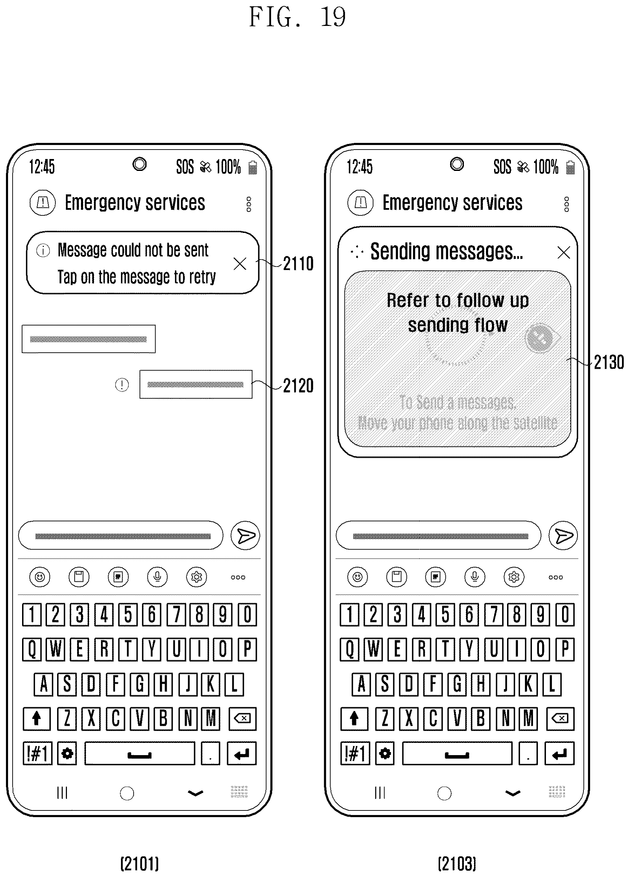

FIG. 19 illustrates an example of an interface supported by an electronic device according to an embodiment of the disclosure in the event of a message transmission failure.

Referring to FIG. 19, according to an embodiment, the electronic device 101 may attempt to transmit a message 2120 composed by a user. According to an embodiment, when the electronic device 101 fails to transmit the message, the electronic device 101 may provide a first pop-up interface 2110 related to the message failure on an application screen, as illustrated in example <2101>.

According to an embodiment, when the message transmission fails, the user may select (e.g., touch) the message 2120, which failed to be transmitted, to retry satellite connection. For example, when the message transmission fails, the electronic device 101 may support retrying message transmission over the satellite connection, based on a user input based on the corresponding message.

According to an embodiment, in response to the user input based on the message which failed to be transmitted, the electronic device 101 may provide a second pop-up interface 2130, as illustrated in example <2103>, to guide the user to re-perform satellite pointing.

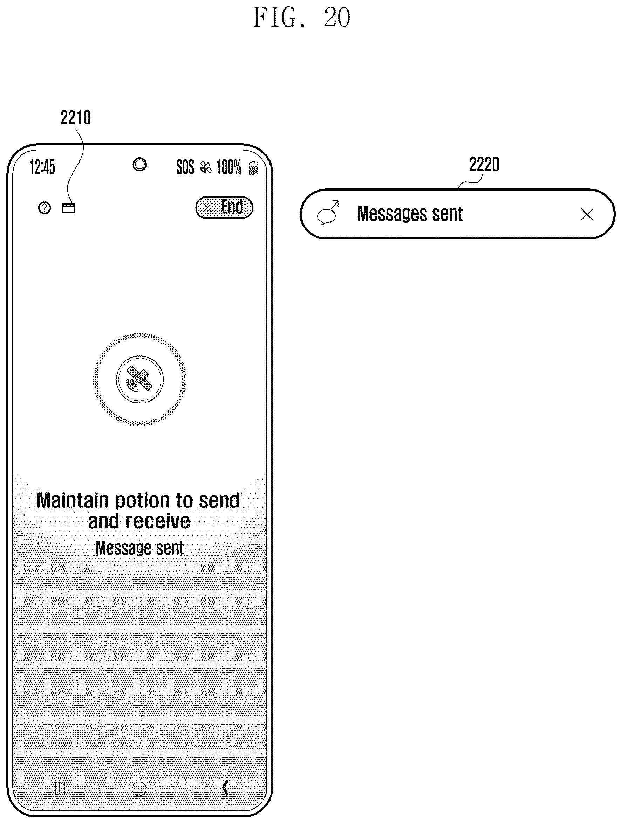

FIG. 20 illustrates an example of an interface that may be supported by an electronic device according to an embodiment of the disclosure, based on a satellite service.

Referring to FIG. 20, the electronic device 101 may provide a switching object 2210 that enables switching a pointing interface from a full screen to a pop-up interface. The switching object 2210 may be provided in a designated area (e.g., the top left of a screen) on the pointing interface, but is not limited thereto.

According to an embodiment, a user may directly switch a full-screen pointing interface to a pop-up interface 2220, based on the switching object 2210. For example, the electronic device 101 may automatically switch to the pop-up interface 2220 when message reception/sending is successful in the pointing interface. For example, the electronic device 101 may switch directly to the pop-up interface 2220 regardless of the success of the message reception/sending in response to a user input to the switching object 2210 in the pointing interface.

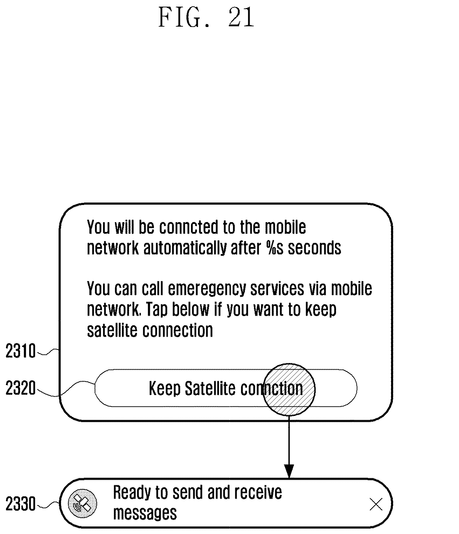

FIG. 21 illustrates an example of an interface that may be supported by an electronic device according to an embodiment of the disclosure, based on a satellite service.

Referring to FIG. 21, FIG. 21 may illustrate an example of an interface that provides a related guide while a satellite service is being performed on an electronic device, for example, when a cellular network that supports emergency services (e.g., emergency calls) is connected or can be connected.

As illustrated in FIG. 21, when a cellular network is connected during a satellite service, the electronic device 101 may provide a pop-up interface 2310 indicating that the electronic device 101 will be automatically connected to the cellular network after a designated time. In an embodiment, the pop-up interface 2310 may include an object (e.g., a stop button 2320) to stop the automatic cellular connection (e.g., to maintain a satellite service based on a satellite connection), along with a guide related to the cellular network connection.

According to an embodiment, the electronic device 101 may, in response to a user input based on the object (e.g., the stop button 2320), maintain the satellite service based on the satellite connection and provide a pop-up interface 2330 related to the status of the performance of the satellite service. According to an embodiment, when automatically connected to the cellular network after the designated time, the electronic device 101 may terminate the previously executed satellite service and a corresponding operation, and may switch to an emergency service based on the cellular network connection to support a corresponding operation.

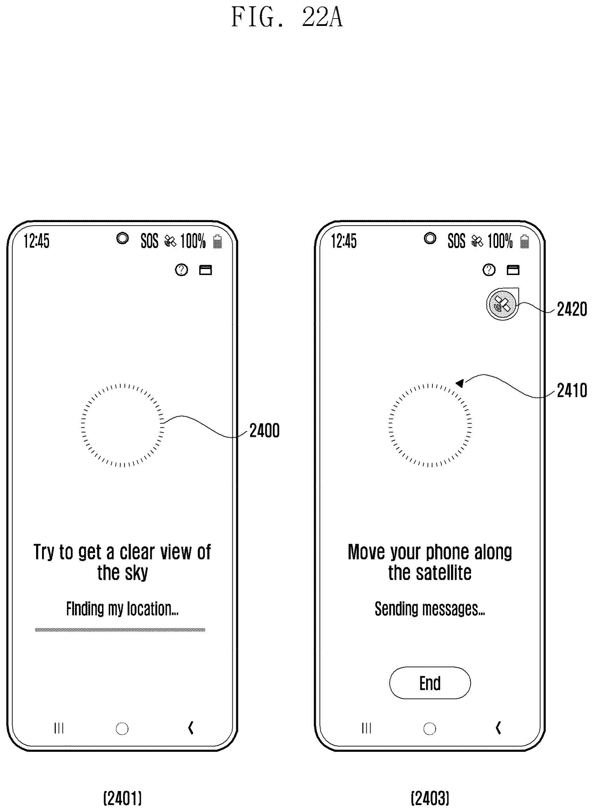

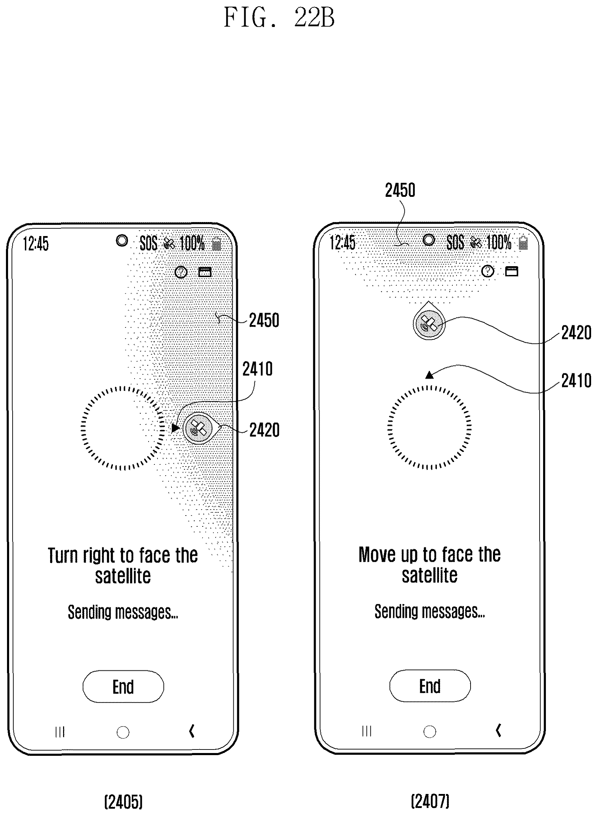

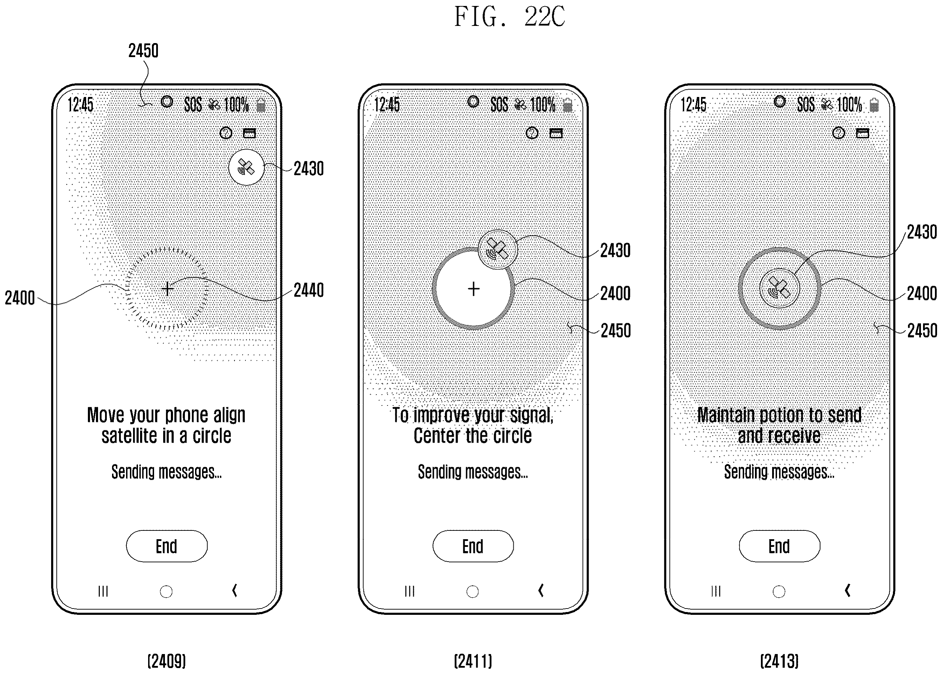

FIGS. 22A, 22B, and 22C illustrate an example of an interface for supporting satellite pointing in an electronic device according to an embodiment of the disclosure.

According to an embodiment, FIGS. 22A, 22B, and 22C illustrate an example of to supporting satellite pointing by interacting with a user via a pointing interface. According to an embodiment, FIGS. 22A, 22B, and 22C may be performed as operations corresponding to the aforementioned operations of supporting satellite pointing based on a pointing interface. Although one example of a pointing interface is described below, various examples of the pointing interface described below may also be provided by a pop-up interface (e.g., a second pop-up interface) that supports a pointing operation.

According to an embodiment, the pointing interface may include a first view area (e.g., a pointing guidance area) for inducing (or guiding) a user to perform pointing, and a second view area (e.g., a guide display area) for providing guide information (e.g., a message) corresponding to an ongoing pointing operation. According to an embodiment, the first view area (e.g., the pointing guidance area) may be provided based on a graphical object, and the second view area (e.g., the guide display area) may be provided based on a text object. However, the disclosure is not limited thereto.

According to an embodiment, example <2401> may illustrate an example of an initial pointing interface in which the electronic device 101 performs a position search with respect to the electronic device 101 and a satellite when executing a satellite service, and which includes visual information related thereto. As illustrated in example <2401>, the electronic device 101 may search for the position of the satellite, and may provide, during the position search, a pointing interface that includes an interface indicating that the position search is in progress. For example, the pointing interface may include an affordance object 2400 for pointing guidance, and may include a related guide (e.g., "Try to get a clear view of the sky" and "Finding my location ...") according to the position search by the electronic device 101.

According to an embodiment, when the position of the satellite is found, the electronic device 101 may provide a pointing interface including the affordance object 2400 for pointing guidance, a position indicator 2410 indicating a direction corresponding to the founded position of the satellite, and a satellite icon 2420 at the direction corresponding to the found position of the satellite, as illustrated in example <2403>. According to an embodiment, the pointing interface may include a related guide (e.g., "Move your phone along the satellite") to manipulate the electronic device 101 based on the found position of the satellite.

According to an embodiment, when the position of a satellite is found based on performing the position search, the electronic device 101 may include and provide the satellite icon 2420 in the pointing interface, as illustrated in example <2403>. According to an embodiment, the pointing interface may further include, in addition to the satellite icon 2420, the position indicator 2410 (e.g., a triangle icon, an arrow, or a direction indication icon) that indicates the direction in which the satellite is located. According to an embodiment, the satellite icon 2420 may be provided in association with the affordance object 2400, based on a direction (e.g., azimuth angle and/or elevation angle) corresponding to the founded position of the satellite. In an embodiment, the azimuth angle may be directional information indicating whether the satellite is located to the left or right of the electronic device 101. In an embodiment, the elevation angle may be directional information indicating whether the satellite is located above or below relative to the tilt of the electronic device 101.

According to an embodiment, the satellite icon 2420 may be provided in a corresponding area to indicate a direction corresponding to the position of the satellite relative to the affordance object 2400. According to an embodiment, the position indicator 2410 may be provided around the affordance object 2400 (e.g., adjacent to the outer edge of a circle icon) to indicate a direction corresponding to the founded position of the satellite.

In an embodiment, a user may perform a user input (or a gesture) to move the electronic device 101 up, down, left, or right based on the position of the satellite icon 2420 provided via the pointing interface and/or a direction indicated by the position indicator 2410. For example, the user may rotate the electronic device 101 to face a left direction or a right direction, and/or adjust the degree of tilt of the electronic device 101 to face an upward direction or a downward direction . For example, a user may perform an interaction for adjusting the direction of the electronic device 101 so as to correspond to the satellite icon 2420 of the pointing interface.

According to an embodiment, the electronic device 101 may provide visual information corresponding to changes in pointing, based on the user input (e.g., the gesture). According to an embodiment, as illustrated in examples <2405>, <2407>, <2409>, <2411>, and <2413>, the electronic device 101 may visually provide changes in pointing between the electronic device 101 and the satellite in response to manipulation of the electronic device 101 based on the user input.

According to an embodiment, the electronic device 101 may change the position of a satellite icon 2430 (e.g., change the position of the satellite icon 2430 in a rightward, upward, or diagonal direction relative to the affordance object 2400) in response to the changing direction of the satellite and in response to the manipulation of the electronic device 101 based on the user input. According to an embodiment, as the electronic device 101 approaches a direction corresponding to the satellite (e.g., approaches pointing), the electronic device 101 may change the size of the satellite icon 2430 (e.g., increase the size of the icon in response to proximity information).

According to an embodiment, in examples <2403> to <2407>, the satellite icon 2420 may be a first satellite icon 2420 for indicating a schematic position (and/or direction) of the satellite in conjunction with the position indicator 2410. According to an embodiment, the satellite icon 2430 in example <2409> may be a second satellite icon 2430 for indicating a substantial position (and/or direction) of the satellite, when the electronic device 101 is substantially close to the direction corresponding to the satellite (e.g., close to pointing), and performing pointing using the satellite icon 2430. For example, when the satellite is detected within a designated range for pointing based on the satellite position search, the electronic device 101 may display the satellite icon 2430 on a screen. According to an embodiment, the electronic device 101 may display the first satellite icon 2420 and the second satellite icon 2430 with different sizes, shapes, and/or colors.

According to an embodiment, the electronic device 101 may not display the position indicator 2410 when displaying the satellite icon 2430 in example <2409>. For example, the electronic device 101 may start displaying the satellite icon 2430 on the screen without displaying the position indicator 2410, and may display an object 2440 (e.g., a "+" object) that indicates the center of the affordance object 2400.

According to an embodiment, the electronic device 101 may provide visual information (e.g., an animation effect) in which the satellite icon 2430 moves toward (or approaches) the center of the affordance object 2400 (e.g., a circle icon) as the electronic device 101 approaches a direction corresponding to the satellite. According to an embodiment, as the electronic device 101 approaches the direction corresponding to the satellite, the electronic device 101 may provide a highlighting (or color) change (e.g., a spreading effect) in the surrounding color (e.g., background color), as illustrated by an element 2450, in response to the change in the satellite icon 2430.

According to an embodiment, when the pointing between the electronic device 101 and the satellite is nearing completion, the electronic device 101 may display the satellite icon 2430 overlapping (or superposed on) the border of the affordance object 2400 (e.g., the border of the circle icon), as illustrated in example <2411>. According to an embodiment, the electronic device 101 may highlight the satellite icon 2430 by changing the color of the satellite icon 2420 (e.g., color inversion between the inside and outside colors) based on the satellite icon 2430 being located on the border of the affordance object 2400. According to an embodiment, when the satellite icon 2430 and the affordance object 2400 are provided while overlapping each other in one area, the affordance object 2400 may be displayed as a circle, the border of which has changed from a dashed line to a solid border, and the satellite icon 2430 may be displayed as a satellite icon with an increased size and an inverted color.

According to an embodiment, when pointing between the electronic device 101 and the satellite is completed, the electronic device 101 may position and display the satellite icon 2430 within the affordance object 2400 (e.g., at the center of the circle), as illustrated in example <2413>.

According to an embodiment, as illustrated in examples <2405>, <2407>, <2409>, <2411>, and <2413>, the electronic device 101 may visually provide pointing changes between the electronic device 101 and the satellite, while providing various guides (e.g., messages) corresponding to the pointing changes.

According to an embodiment, although not illustrated, when satellite pointing fails, the electronic device 101 may provide designated visual information related to the failure. The designated visual information related to the failure may include, for example, a related guide (e.g., a failure guide) (e.g., Retry pointing to another satellite), along with a graphical element that may intuitively represent the failure . According to an embodiment, when satellite pointing fails, the electronic device 101 may further include and provide a retry object (e.g., a button) that enables the user to retry the corresponding operation. According to an embodiment, the user may use the retry object to retry the satellite pointing.

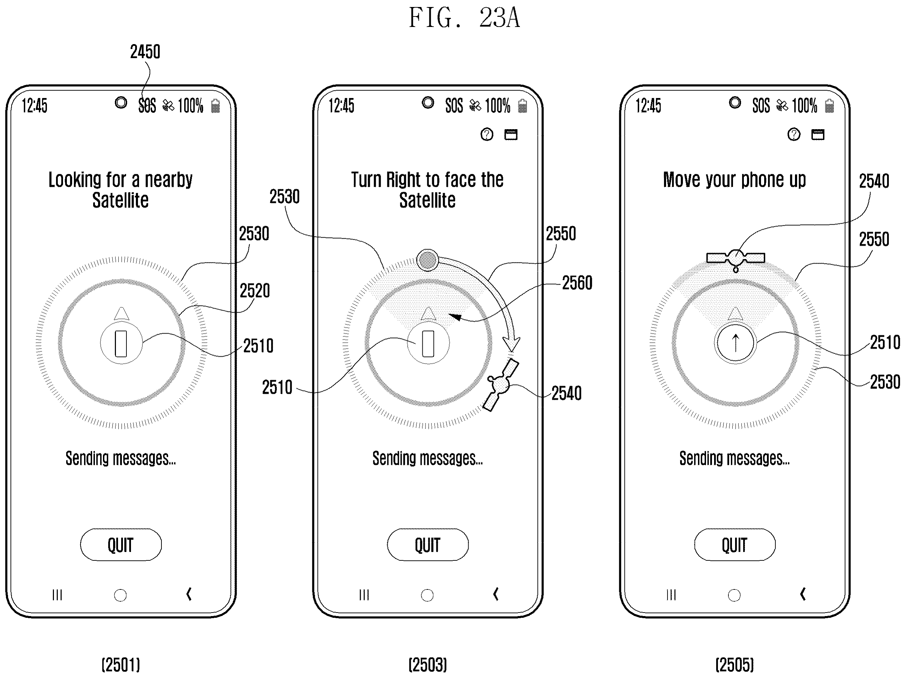

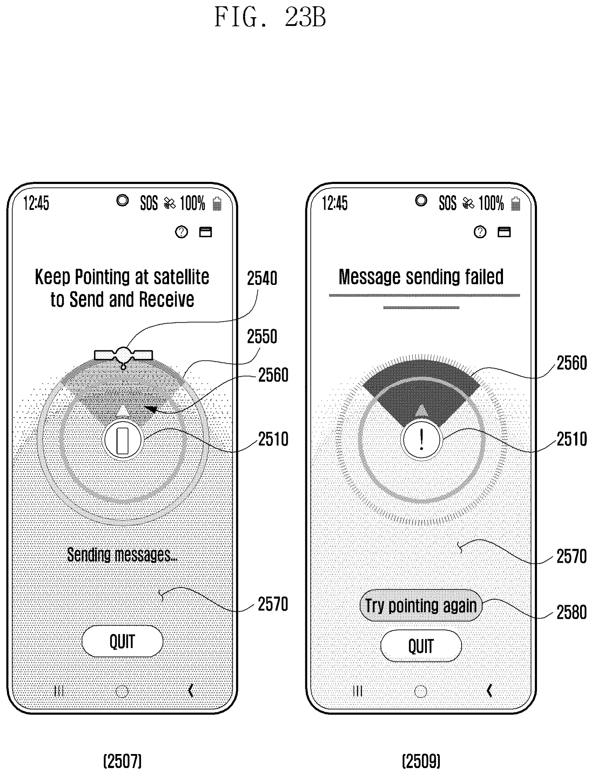

FIGS. 23A and 23B illustrate an example of an interface for supporting satellite pointing in an electronic device according to an embodiment of the disclosure.

According to an embodiment, FIGS. 23A and 23B illustrate an example of interacting with a user via a pointing interface to support satellite pointing. According to an embodiment, FIGS. 23A and 23B may be performed as operations corresponding to the aforementioned operations (e.g., FIGS. 22A to 22C) of supporting satellite pointing based on a pointing interface, and visual information may be variously configured and provided via the pointing interface. Hereinafter, different pieces of visual information in the pointing interface will be described, and descriptions of identical or similar configurations may be omitted for simplicity.

According to an embodiment, examples <2501>, <2503>, <2505>, <2507>, and <2509> may support a satellite pointing operation corresponding to that described in the description made with reference to FIGS. 22A to 22C. According to an embodiment, when compared with FIGS. 22A to 22C, examples <2501>, <2503>, <2505>, <2507>, and <2509> may differ in the shape of a position indicator 2510, an affordance object 2520, and a satellite icon 2540, and in the manner in which the satellite icon 2540 is provided based on the affordance object 2520.

Referring to FIGS. 23A and 23B, according to an embodiment, the pointing interface may include a direction guide object 2530, which guides the position and movement direction of the satellite icon 2540, outside the affordance object 2520. According to an embodiment, the satellite icon 2540 may be provided with an animated effect that the satellite icon 2540 orbits (e.g., revolves) around the perimeter of the affordance object 2520 along the direction guide object 2530. According to an embodiment, the position indicator 2510 may be provided at the center position within the affordance object 2520.

According to an embodiment, as illustrated in examples <2503> to <2507>, the pointing interface may include a pointing completion object 2560 regarding a range in which that pointing is accomplished between the electronic device 101 and a satellite by using the position indicator 2510 within the affordance object 2520. The pointing completion object 2560 may be provided in a fan shape with reference to the position indicator 2510. The pointing completion object 2560 may be highlighted through a color change as the electronic device 101 approaches a direction corresponding to the satellite.

According to an embodiment, as illustrated in example <2503>, the pointing interface may provide a panning guide 2550 when the direction (e.g., left/right) of the electronic device 101 differs from the satellite position. According to an embodiment, as illustrated in example <2505>, the pointing interface may provide a tilting guide when the direction (e.g., left/right) of the electronic device 101 matches the satellite position, but the up/down direction (e.g., tilt) does not match. According to an embodiment, the tilting guide may be provided and displayed as a designated icon (e.g., an arrow) within the position indicator 2510.

According to an embodiment, when pointing is completed between the electronic device 101 and the satellite, the electronic device 101 may provide a designated icon (e.g., a phone icon) within the position indicator 2510 and provide the pointing complete object 2560 with a highlighted color, as illustrated in example <2507>.

According to an embodiment, as the electronic device 101 approaches a direction corresponding to the satellite, the electronic device 101 may provide a highlighting (or color) change in the surrounding color (e.g., the background color), as illustrated by an element 2570.

According to an embodiment, as illustrated in examples <2501>, <2503>, <2505>, and <2507>, the electronic device 101 may visually provide changes in pointing between the electronic device 101 and the satellite, while providing a guide (e.g., a message) corresponding to each of the pointing changes.

According to an embodiment, as illustrated in example <2509>, when the satellite pointing fails, the electronic device 101 may provide designated visual information related to the failure. The designated visual information related to the failure may include, for example, a color change of a graphical element (e.g., color changes of the position indicator 2510 and the pointing complete object 2560) that may intuitively indicate the failure, along with a related guide (e.g., a failure guide). According to an embodiment, the electronic device 101 may further include and provide a retry object 2580 that enables, when satellite pointing fails, the user in retrying the operation. According to an embodiment, the user may use the retry object 2580 to retry the satellite pointing.

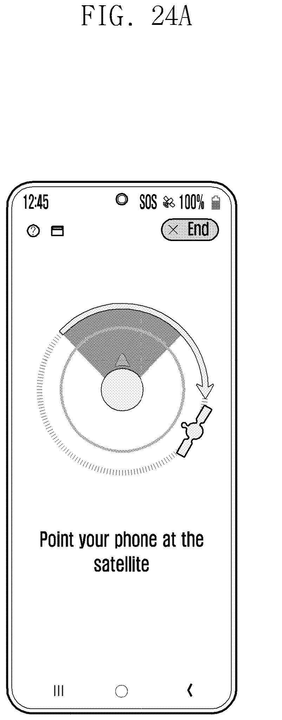

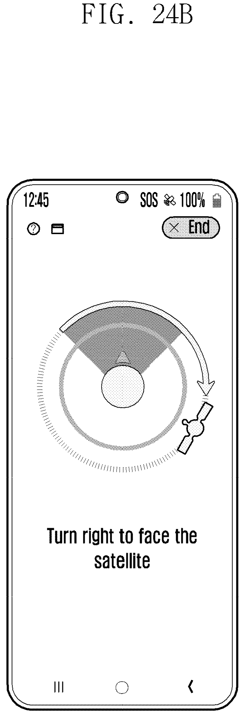

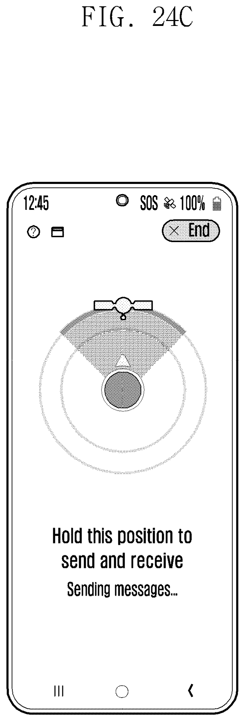

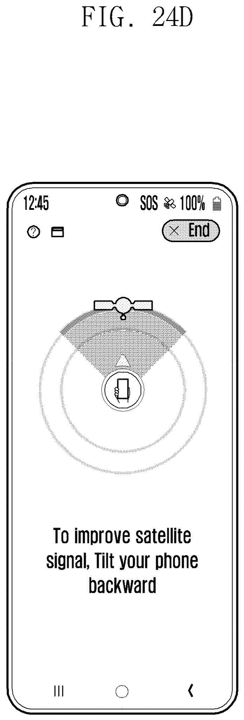

FIGS. 24A, 24B, 24C, and 24D illustrate an example of an interface for supporting satellite pointing in an electronic device according to an embodiment of the disclosure.

According to an embodiment, FIGS. 24A, 24B, 24C, and 24D illustrate an example of interacting with a user via a pointing interface to support satellite pointing. According to an embodiment, FIGS. 24A, 24B, 24C, and 24D may be performed as operations corresponding to the foregoing operations (e.g., FIGS. 23A and 23B) that support satellite pointing based on a pointing interface, and visual information may be various configured and provided via the pointing interface.

According to an embodiment, the electronic device 101 may support adjusting an azimuth angle (e.g., a left/right direction) and/or an elevation angle (e.g., in an up/down direction) to align the positions of the electronic device 101 and a satellite during a pointing operation. According to an embodiment, the electronic device 101 may separately provide azimuth angle adjustment and elevation angle adjustment when the azimuth angle adjustment and/or the elevation angle adjustment is necessary to align the position thereof with the satellite.

According to an embodiment, as illustrated in FIGS. 24A and 24B, the electronic device 101 may first provide an azimuth angle guide (e.g., a panning guide) to adjust the azimuth angle at which a pointing operation is easier (or less difficult). According to an embodiment, the azimuth angle guide may be provided based on a graphical object and a related guide (e.g., Turn right to face the satellite), which instruct adjustment of the left/right direction of the electronic device 101.

According to an embodiment, as illustrated in FIGS. 24C and 24D, angle when the azimuth between the electronic device 101 and the satellite is aligned but a message is not being received/sent, the electronic device 101 may provide an elevation angle guide (e.g., a tilting guide) to adjust the elevation angle. According to an embodiment, the elevation angle guide may be provided based on a graphical object and a related guide (e.g., To improve satellite signal, Tilt your phone backward), which instruct adjustment of the up/down direction of the electronic device 101.

According to an embodiment, an elevation angle guide may not be displayed when message reception/sending is completed or when the elevation angle is within a stable range (e.g., a range in which a satellite signal has strong intensity, e.g., a range from about -20 degrees to about 20 degrees). According to an embodiment, referring to FIG. 24D, when the elevation angle is equal to or less than about -20 degrees, the electronic device 101 may provide an elevation angle guide that guide the electronic device 101 to tilt forward based on the elevation angle guide. According to an embodiment, when the elevation angle is equal to or greater than about 20 degrees, the electronic device 101 may provide an elevation guide that guides the electronic device 101 to tilt backward based on the elevation guide.

According to an embodiment, as illustrated in FIG. 24D, when the elevation angle with the satellite is within the stable range according to the elevation angle guide (e.g., a tilt and a related guide based on a phone icon in a position indicator), the elevation angle guide based on the position indicator may be removed and not displayed, as illustrated in FIG. 24C.

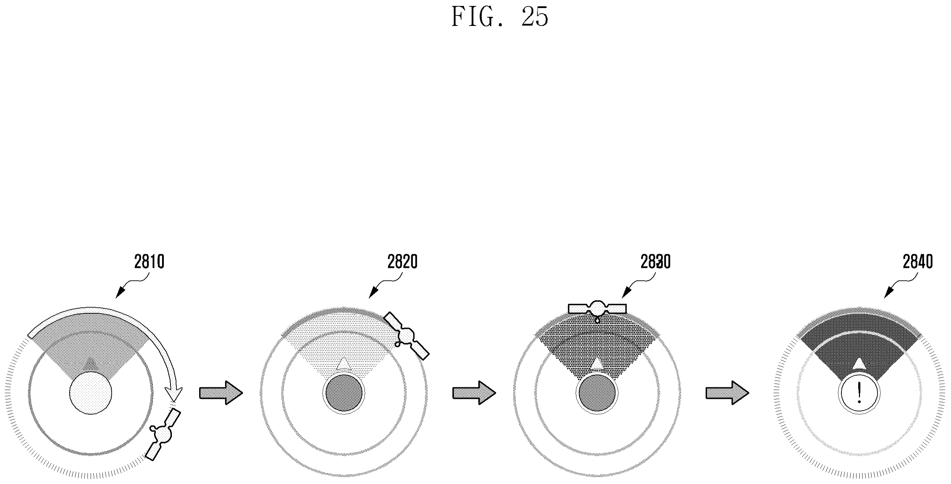

FIG. 25 illustrates an example of an interface for supporting satellite pointing in an electronic device according to an embodiment of the disclosure.

According to an embodiment, FIG. 25 illustrates that, during satellite pointing support, as the direction of the electronic device 101 enters a range in which a satellite signal has strong signal intensity (e.g., a range from about -20 degrees to about 20 degrees), the range gradation may change to provide an affordance so that a user adjusts the direction of the electronic device 101 to be aligned with the strong intensity range.

Referring to FIG. 25, as illustrated in example <2810>, the electronic device 101 may be guided for left-right alignment via an azimuth angle guide (or a panning guide). As illustrated in example <2820>, when entering the strong intensity range (e.g., the range from about -20 degrees to about 20 degrees) according to the panning guide, the electronic device 101 may provide the range gradation with a changed color. Here, upon initial entry, the changed color may be provided in a lighter tone. As illustrated in example <2820> and example <2830>, as the electronic device 101 approaches the strong intensity range (e.g., the range from about -20 degrees to about 20 degrees) according to the panning guide, the electronic device 101 may progressively darken the color of the range gradation.

As illustrated in example <2840>, when message transmission fails, the electronic device 101 may remove a satellite icon and highlight the range gradation and a position indicator by changing the colors thereof to a designated color (e.g., orange) related to the message transmission failure.

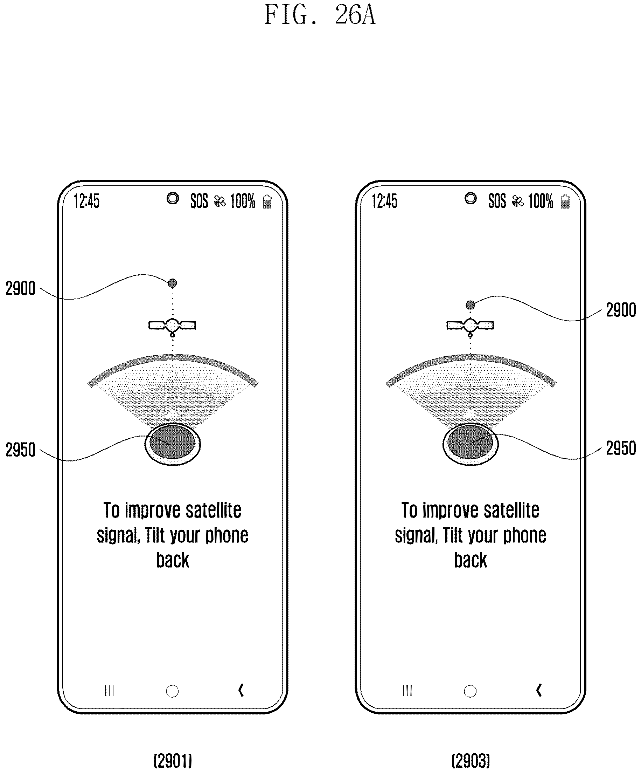

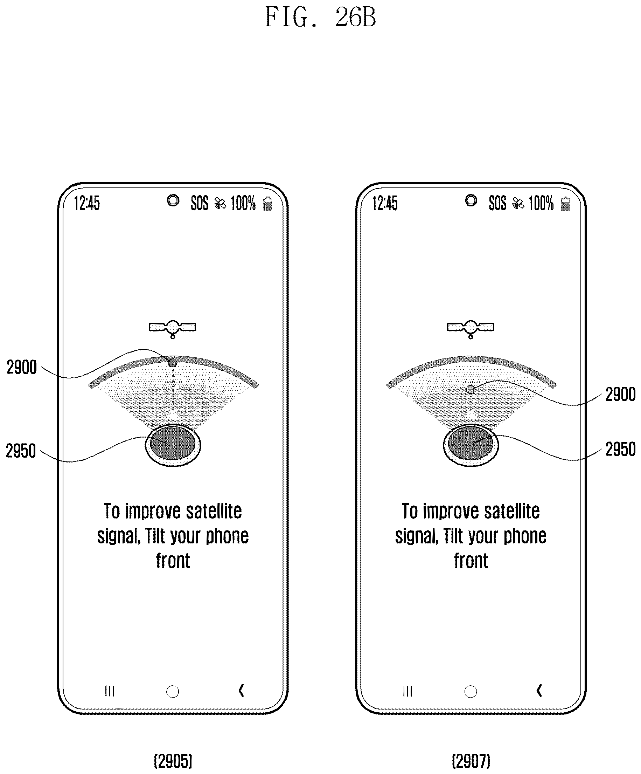

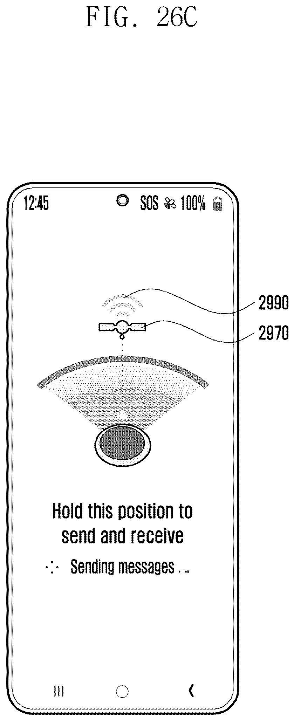

FIGS. 26A, 26B, and 26C illustrate an example of an interface for supporting satellite pointing on an electronic device according to an embodiment of the disclosure.

According to an embodiment, FIGS. 26A, 26B, and 26C may illustrate an example of providing an elevation angle guide (or a tilting guide) with a three-dimensional (3D) spatial representation for precise adjustment of the elevation angle during satellite pointing support.

Referring to FIGS. 26A and 26B, FIG. 26A may illustrate an example of providing an elevation angle guide when an elevation angle is equal to or greater than about 20 degrees, and FIG. 26B may illustrate an example of providing an elevation angle guide when an elevation angle is equal to or less than about -20 degrees. According to an embodiment, the elevation angle guide may include an elevation angle object 2900 that indicates elevation angle information of the electronic device 101. According to an embodiment, the elevation angle guide may include a position indicator 2950 as a visually tilted icon, thereby providing a three-dimensional effect to a user.

According to an embodiment, the electronic device 101 may provide an animation in which the elevation angle object 2900 moves up or down according to the tilt value of the electronic device 101, and may provide a corresponding guide. For example, the user may tilt the electronic device 101 forward or backward to align the elevation angle object 2900 with a satellite position. In an embodiment, the elevation angle object 2900 may be an object indicating elevation angle information of the electronic device 101.

According to an embodiment, FIG. 26C may illustrate an example in which the elevation angle is set within a stable range (e.g., a range from about -20 degrees to about 20 degrees). According to an embodiment, when the elevation angle falls within (e.g., enters) the stable range, an elevation angle guide may not be displayed. For example, when the elevation angle is within a stable range, the electronic device 101 may not display the elevation angle object 2900, but may display a satellite communication state indicator 2990, which indicates satellite connection and message transmission states, adjacent to a satellite icon 2970.

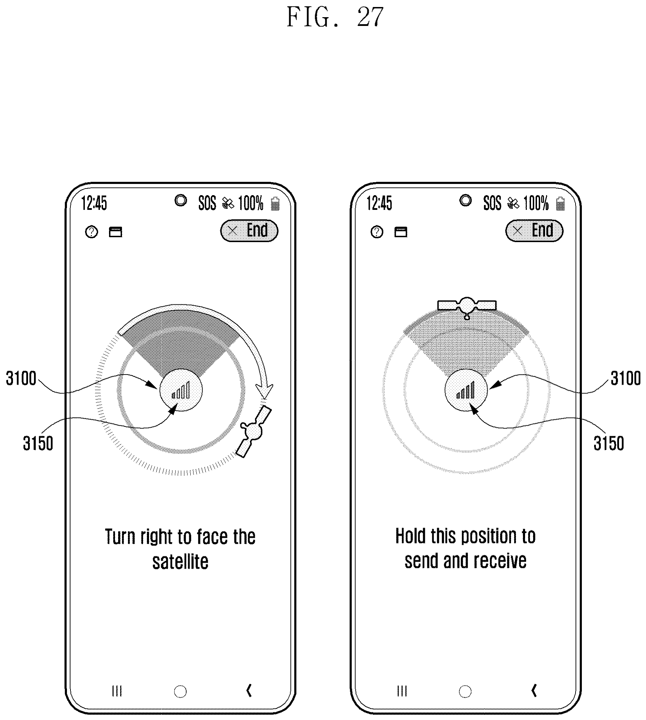

FIG. 27 illustrates an example of an interface for supporting satellite pointing on an electronic device according to an embodiment of the disclosure.

According to an embodiment, FIG. 27 illustrates an example of providing, based on pointing, visual information based on changes in satellite signal intensity.

As illustrated in FIG. 27, the change in satellite signal intensity may be provided based on the degree of pointing. According to an embodiment, the change in signal intensity may be displayed within a position indicator 3100 (e.g., at the center) by using a signal icon 3150 that indicates the satellite signal intensity. For example, the signal icon 3150 may be provided by changing the color of an intensity bar in real time in response to changes in signal intensity.

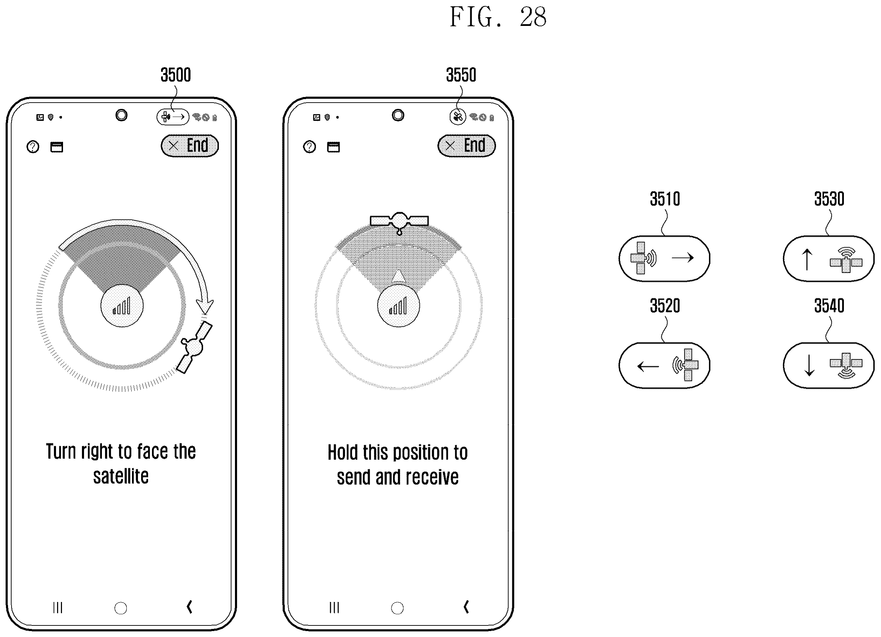

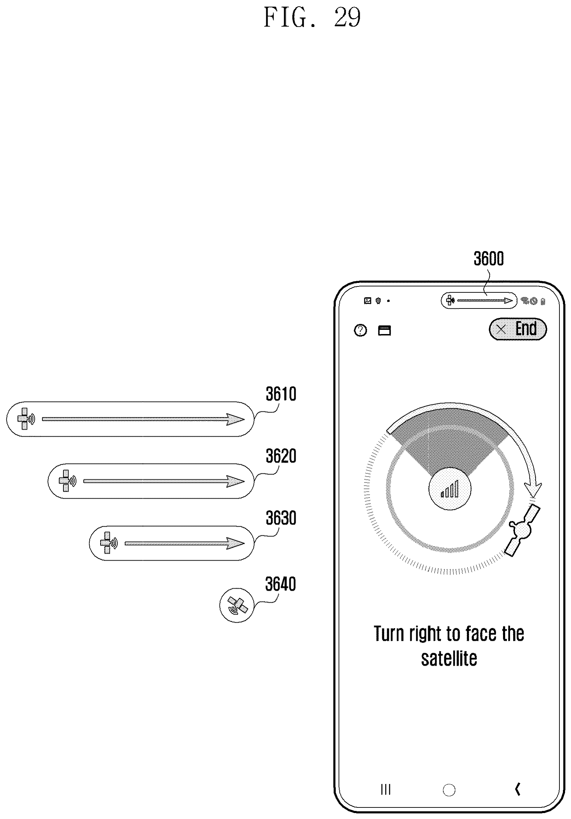

FIGS. 28 and 29 illustrate an example of an interface for supporting satellite pointing in an electronic device according to an embodiment of the disclosure.

According to an embodiment, FIGS. 28 and 29 illustrate an example of providing a visual que corresponding to a satellite service or an emergency service via an indicator area of the electronic device 101.

Referring to FIG. 28, while performing the satellite pointing, the electronic device 101 may provide, via the indicator area, a first designated visual que 3500 related to a pointing guide or a second designated visual que 3550 related to pointing completion, in response to the satellite pointing.

According to an embodiment, in a situation where the electronic device 101 is required to be moved in response to performing the pointing, the electronic device 101 may provide the first designated visual que 3500, which uses an animation to guide the direction in which the electronic device 101 should be moved, to the satellite icon in the indicator area, together with an icon (e.g., an arrow icon) indicating the direction so that the electronic device 101 is oriented upward, downward, leftward, or rightward.

According to an embodiment, when the electronic device 101 is required to align an azimuth angle (e.g., left/right direction), an icon 3510 or 3520 (e.g., the right-direction indication arrow 3510 or the left-direction indication arrow 3520) indicating the direction in which the electronic device 101 should be moved may be provided as the first designated visual que 3500 along with the satellite icon by being placed to the right or left of the satellite icon, depending on the direction in which the electronic device 101 should be moved.

According to an embodiment, when the electronic device 101 is required to align an elevation angle (e.g., up/down direction), icon 3530 or 3540 (e.g., the up-direction indication arrow 3530 or the down-direction indication arrow 3540) indicating the direction in which the electronic device 101 should be moved may be provided as the first designated visual que 3500 along with the satellite icon by being placed to the left or right of the satellite icon.

According to an embodiment, when a satellite comes into a connection range (e.g., when pointing is complete), the electronic device 101 may switch and provide the first designated visual que 3500 to the second designated visual que 3550 and provide the second designated visual que 3550. For example, an icon (e.g., a direction indication arrow) indicating the direction in which the electronic device 101 should be moved may not be displayed (or may be omitted), and the satellite icon may be provided in a fixed default state.

Referring to FIG. 29, the electronic device 101 may provide a visual que 3600 in which an icon (e.g., a left or right-direction indication arrow) indicating the movement direction is extended to the left/right in response to the distance that electronic device 101 needs to be moved.

According to an embodiment, when the electronic device 101 is required to align an azimuth angle (e.g., left/right direction), the electronic device 101 may provide an icon (e.g., a right-direction indication arrow or a left-direction indication arrow) indicating the direction in which the electronic device 101 should be moved, as illustrated in elements 3610, 3620, 3630, and 3640, with different extended lengths corresponding to the direction and distance in which movement is required. For example, a direction indication icon may be provided as the visual que 3600 along with a satellite icon by being placed to the right or left of the satellite icon, depending on the direction in which movement is required.

According to an embodiment, as the electronic device 101 and the satellite get closer in response to performing the pointing, the electronic device 101 may gradually decrease and display the extension length (e.g., the element 3610 → the element 3620 → the element 3630). According to an embodiment, when the satellite comes into the connection range, the electronic device 101 may provide the satellite icon such as the element 3640 in a fixed default state without displaying (or omitting to display) a direction indication icon (e.g., a direction indication arrow).

According to an embodiment, the designated visual ques 3500 and 3550 (e.g., an SOS icon and/or a satellite icon) may be provided via the indicator area, based on the execution of a satellite service or an emergency service. According to an embodiment, the designated visual ques 3500 and 3550 may be provided via the indicator area regardless of the execution of the satellite service or emergency service, when there is no terrestrial network and the electronic device 101 is in a condition in which satellite connection is possible. According to an embodiment, the designated visual ques 3500 and 3550 in the indicator area may be displayed regardless of the execution of the satellite service or emergency service, and may be highlighted by applying animation effects based on the visual ques 3500 and 3550 during actual satellite function operation.

An operation method performed by an electronic device 101 according to an embodiment of the disclosure may include an operation of providing a pointing interface as a full screen of a display based on detection of satellite service execution, the pointing interface being configured to induce pointing between the electronic device and a satellite. The operation method may include an operation transmitting a message, based on pointing completion based on the pointing interface. The operation method may include an operation of switching the pointing interface to a first pop-up interface, based on completion of the message transmission, and providing the first pop-up interface as a pop-up. The operation method may include an operation of switching, based on a message-related trigger, the first pop-up interface to a second pop-up interface configured to induce pointing toward the satellite and providing the second pop-up interface as a pop-up.

According to an embodiment, the operation method may include an operation of controlling an operational state of a communication circuit, based on the message-related trigger.

According to an embodiment, the message-related trigger may include a trigger related to message reception from the satellite or message transmission by the electronic device.

According to an embodiment, the operation method may include an operation of controlling switching between the first pop-up interface and the second pop-up interface, based on the operational state of the communication circuit being transitioned.

According to an embodiment, the operation method may include an operation of controlling switching between the first pop-up interface and the second pop-up interface when the communication circuit transitions from an idle state to a transmit state, the communication circuit transitions from the transmit state to a listen state, or the communication circuit transitions from the transmit state to the idle state.

According to an embodiment, the idle state may include a state in which the electronic device 101 is not performing communication with the satellite. According to an embodiment, the transmit state may include a state in which the electronic device 101 is receiving/sending messages from/to the satellite. According to an embodiment, the listen state may include a state in which the electronic device 101 identifies whether there is a message to be received by the electronic device 101 from the satellite.

According to an embodiment, the operation method may include an operation of providing the first pop-up interface when the communication circuit is in the idle state or the listen state. According to an embodiment, the operation method may include an operation of providing the second pop-up interface when the communication circuit is in the transmit state.

According to an embodiment, the operation method may include an operation of providing the first pop-up interface in a reduced form on an application screen when the communication circuit is in the idle state or the listen state. According to an embodiment, the operation method may include an operation of, in the transmit state, providing the second pop-up interface in an expanded form on an application screen and supporting satellite pointing, based on the second pop-up interface.

According to an embodiment, the operation method may include an operation of receiving a notification message from the satellite in the listen state of the communication circuit.

According to an embodiment, the notification message may include a message indicating whether there is a message to be received from the satellite.

According to an embodiment, the notification message may include a message pushed from the satellite, regardless of the pointing between the electronic device 101 and the satellite.

According to an embodiment, the operation method may include an operation of transitioning the operational state of the communication circuit from the listen state to the transmit state, based on identifying, based on the notification message, a message to be received in the listen state of the communication circuit, or based on a message transmission request being made in the listen state.

According to an embodiment, the operation method may include an operation of controlling the operational state of the communication circuit to transition from the listen state to the idle state, based on a designated time elapsing in the listen state of the communication circuit.

According to an embodiment, the operation method may include an operation of detecting the execution of the satellite service, based at least on a user input based on a designated object for entering the satellite service, or on a case in which the electronic device 101 has not been connected to a terrestrial network when an emergency service execution request is made by a designated application.

According to an embodiment, the operation method may include an operation of performing satellite pointing through interaction with a user based on the pointing interface, an operation of performing message transmission based on completion of the satellite pointing, an operation of, when the message transmission is successful, switching the pointing interface to the first pop-up interface and providing the first pop-up interface on an application screen, and an operation of providing information about completion of the message transmission, based on the first pop-up interface.

According to an embodiment, the operation method may include an operation of, when the message transmission is successful, controlling a communication circuit to transition from a transmit state to a listen state, an operation of receiving a notification message from the satellite in the listen state of the communication circuit, an operation of switching the first pop-up interface to the second pop-up interface, based on receiving the notification message, and providing the second pop-up interface on a portion of an application screen, an operation of controlling the communication circuit to transition from the listen state to the transmit state, and an operation of performing satellite pointing through interaction with a user based on the second pop-up interface.

According to an embodiment, the pointing interface and the second pop-up interface may include visual information related to an affordance object, a position indicator, a satellite icon, and/or a guide configured to induce the user's satellite pointing.

The electronic device according to various embodiments set forth herein may be one of various types of electronic devices. The electronic device may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that the embodiments and the terms used therein are not intended to limit the technological features set forth herein to particular embodiments and the disclosure includes various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one or all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used in various embodiments of the disclosure, the term "module" may include a unit implemented in hardware, software, or firmware, and may be interchangeably used with other terms, for example, "logic," "logic block," "component," or "circuit". The "module" may be a single integrated component, or a minimum unit or part thereof, adapted to perform one or more functions. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Herein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, methods according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities may be separately disposed in another element. According to various embodiments, one or more of the above-described elements or operations may be omitted, or one or more other elements or operations may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

Various embodiments of the disclosure described and shown in the specification and the drawings are merely specific examples that have been presented to easily explain the technical details of the disclosure and help understanding of the disclosure, and are not intended to limit the scope of the disclosure. Therefore, the scope of the disclosure should be construed to include, in addition to the embodiments disclosed herein, all changes and modifications derived based on the technical idea of the disclosure.

## Claims

1. An electronic device comprising:
a display;
a communication circuit configured to support satellite communication with a satellite;
at least one processor; and
a memory configured to store instructions,
wherein the instructions are configured to, when executed by the at least one processor, cause the electronic device to:
based on detecting execution of a satellite service, provide a pointing interface as a full screen of the display, the pointing interface being configured to induce pointing between the electronic device and a satellite;
based on completion of the pointing based on the pointing interface, transmit a message;
based on completion of transmission of the message, switch the pointing interface to a first pop-up interface, and provide the first pop-up interface as a pop-up; and
based on a message-related trigger related to message reception from the satellite and/or message transmission by the electronic device, switch the first pop-up interface to a second pop-up interface configured to induce pointing toward the satellite, and provide the second pop-up interface as a pop-up.

2. The electronic device of claim 1, wherein the instructions are configured to, when executed by the at least one processor, cause the electronic device to:
control an operational state of the communication circuit, based on the message-related trigger; and
control switching between the first pop-up interface and the second pop-up interface, based on transition of the operational state of the communication circuit.

3. The electronic device of claim 2, wherein the instructions are configured to, when executed by the at least one processor, cause the electronic device to control the switching between the first pop-up interface and the second pop-up interface in case that the communication circuit transitions from an idle state to a transmit state, the communication circuit transitions from the transmit state to a listen state, or the communication circuit transitions from the transmit state to the idle state.

4. The electronic device of claim 3, wherein the idle state comprises a state in which the electronic device is not performing communication with the satellite,
wherein the transmit state comprises a state in which the electronic device is receiving/sending a message from/to the satellite, and
wherein the listen state comprises a state in which the electronic device identifies whether there is a message to be received by the electronic device from the satellite.

5. The electronic device of claim 3, wherein the instructions are configured to, when executed by the at least one processor, cause the electronic device to:
in case that the communication circuit is in the idle state or the listen state, provide the first pop-up interface in a reduced form on an application screen; and
in case that the communication circuit is in the transmit state, provide the second pop-up interface in an enlarged form on an application screen and support satellite pointing, based on the second pop-up interface.

6. The electronic device of claim 3, wherein the instructions are configured to, when executed by the at least one processor, cause the electronic device to, in the listen state of the communication circuit, receive, from the satellite, a notification message indicating whether there is a message to be received from the satellite.

7. The electronic device of claim 6, wherein the notification message comprises a message pushed from the satellite, regardless of the pointing between the electronic device and the satellite.

8. The electronic device of claim 6, wherein the instructions are configured to, when executed by the at least one processor, cause the electronic device to, based on identifying, based on the notification message, a message to be received in the listen state of the communication circuit or based on a message transmission request made in the listen state, transition the operational state of the communication circuit from the listen state to the transmit state.

9. The electronic device of claim 6, wherein the instructions are configured to, when executed by the at least one processor, cause the electronic device to, based on elapse of a designated time in the listen state of the communication circuit, transition the operational state of the communication circuit from the listen state to the idle state.

10. The electronic device of claim 1, wherein the instructions are configured to, when executed by the at least one processor, cause the electronic device to detect the execution of the satellite service in case that the electronic device is not connected to a terrestrial network.

11. The electronic device of claim 1, wherein the instructions are configured to, when executed by the at least one processor, cause the electronic device to:
perform satellite pointing through interaction with a user, based on the pointing interface;
based on completion of the satellite pointing, perform message transmission;
in case that the message transmission is successful, switch the pointing interface to the first pop-up interface and provide the first pop-up interface on a portion of an application screen; and
provide information about completion of the message transmission, based on the first pop-up interface.

12. The electronic device of claim 11, wherein the instructions are configured to, when executed by the at least one processor, cause the electronic device to:
in case that the message transmission is successful, control the communication circuit to transition from a transmit state to a listen state
receive a notification message from the satellite in the listen state of the communication circuit;
based on receiving the notification message, switch the first pop-up interface to the second pop-up interface and provide the second pop-up interface on a portion of an application screen;
control the communication circuit to transition from the listen state to the transmit state; and
perform satellite pointing through interaction with the user, based on the second pop-up interface.

13. The electronic device of claim 1, wherein the pointing interface and the second pop-up interface comprise visual information related to an affordance object, a position indicator, a satellite icon, and/or a guide configured to induce the user's satellite pointing.

14. An operation method of an electronic device for supporting satellite communication with a satellite, the method comprising:
based on detecting execution of a satellite service, providing a pointing interface as a full screen of a display, the pointing interface being configured to induce pointing between the electronic device and a satellite;
based on completion of the pointing based on the pointing interface, transmitting a message;
based on completion of transmission of the message, switching the pointing interface to a first pop-up interface, and providing the first pop-up interface as a pop-up; and
based on a message-related trigger related to message reception from the satellite and/or message transmission by the electronic device, switching the first pop-up interface to a second pop-up interface configured to induce pointing toward the satellite, and providing the second pop-up interface as a pop-up.

15. A non-transitory computer-readable recording medium storing instructions which, when executed by a processor of an electronic device, cause the processor to perform the operations of:
based on detecting execution of a satellite service, providing a pointing interface as a full screen of a display, the pointing interface being configured to induce pointing between the electronic device and a satellite;
based on completion of the pointing based on the pointing interface, transmitting a message;
based on completion of transmission of the message, switching the pointing interface to a first pop-up interface, and providing the first pop-up interface as a pop-up; and
based on a message-related trigger related to message reception from the satellite and/or message transmission by the electronic device, switching the first pop-up interface to a second pop-up interface configured to induce pointing toward the satellite, and providing the second pop-up interface as a pop-up.
